# EUROPEAN PATENT APPLICATION

(11) **EP 4 826 475 A1**
(43) Date of publication of application: **21.10.2026**
(21) Application number: 24957241.3
(22) Date of filing: 09.12.2024
(51) Int. Cl.: G05B 19/4097, B23Q 15/00, G05B 19/42, G05B 19/409

(54) **MACHINING PATH GENERATION DEVICE, MACHINE TOOL SYSTEM, MACHINING PATH GENERATION METHOD, AND PROGRAM**

(30) Priority: 09.10.2024 JP 2024177300
(71) Applicant: Yamazaki Mazak Corporation, Niwa-gun, Aichi 480-0197 (JP)
(72) Inventor: KUROKURA, Moto, Niwa-gun, Aichi 480-0197 (JP); HIRATSUKA, Takuma, Niwa-gun, Aichi 480-0197 (JP)
(74) Representative: TBK
(86) International application number: PCT/JP2024/043331
(87) International publication number: WO 2026/078896

(57) **Abstract**

A tool path generator includes a memory, an interface, and a computing apparatus. The memory is configured to store an algorithm that derives a tool path for forming a screw having a helical groove with a variable lead from a workpiece, based on shape data specifying a cross-sectional shape of the screw orthogonal to a rotation axis of the screw and a plurality of pieces of lead data including a first lead amount of the screw and a second lead amount of the screw. The interface is configured to receive input including the shape data and the plurality of pieces of lead data. The computing apparatus is configured to derive the tool path by inputting the shape data and the plurality of pieces of lead data into the algorithm.

## Description

### Technical Field

The present invention relates to a tool path generator, a machine tool system, a tool path generation method, and a program.

### Background Art

A technique of machining a screw having a helical groove with a machine tool is known.

A related technique is disclosed in Patent Literature 1, which describes a machining apparatus that machines a variable-pitch helical groove. The machining apparatus disclosed in Patent Literature 1 includes a headstock, a cutting-off tool, a servo motor, a carriage, and an NC unit. The headstock drives a cylindrical workpiece to rotate about an axis. The cutting-off tool cuts the outer circumferential surface of the workpiece. The servo motor rotates the cutting-off tool about an axis orthogonal to the workpiece by a predetermined angle. The carriage drives the servo motor in parallel to the axial direction of the workpiece. The NC unit changes the rotational angle of the workpiece and the position of the carriage relative to each other and controls the rotational angle of the servo motor based thereon.

### Citation List

### Patent Literature

PTL 1: JP H6-226503 A

### Summary of Invention

### Technical Problem

It is an object of the present invention to provide a tool path generator, a machine tool system, a tool path generation method, and a program that make it possible to efficiently generate a tool path for forming a screw having a helical groove with a variable lead. Solution to Problem

The embodiment of the present invention relates to a tool path generator, a machine tool system, a tool path generation method, and a program described below.
(1) A tool path generator includes a memory, an interface, and a computing apparatus. The memory is configured to store an algorithm that derives a tool path for forming a screw having a helical groove with a variable lead from a workpiece, based on shape data specifying a cross-sectional shape of the screw orthogonal to a rotation axis of the screw and a plurality of pieces of lead data including a first lead amount of the screw and a second lead amount of the screw. The interface is configured to receive input including the shape data and the plurality of pieces of lead data. The computing apparatus is configured to derive the tool path by inputting the shape data and the plurality of pieces of lead data into the algorithm.
(2) A machine tool system includes a machine tool, a tool path generator, and a controller. The tool path generator is configured to generate a tool path. The controller is configured to generate a control command by executing a machining program created based on the tool path and transmit the control command to the machine tool. The machine tool includes a work holder, a machining head, and a mover. The work holder is configured to support a workpiece and rotate the workpiece about a first axis. The machining head is configured to hold a tool. The mover is configured to move the machining head relative to the work holder. The tool path generator includes a memory, an interface, and a computing apparatus. The memory is configured to store an algorithm that derives the tool path for forming a screw having a helical groove with a variable lead from the workpiece, based on shape data specifying a cross-sectional shape of the screw orthogonal to a rotation axis of the screw and a plurality of pieces of lead data including a first lead amount of the screw and a second lead amount of the screw. The interface is configured to receive input including the shape data and the plurality of pieces of lead data. The computing apparatus is configured to derive the tool path by inputting the shape data and the plurality of pieces of lead data into the algorithm.
(3) A tool path generation method includes receiving shape data specifying a cross-sectional shape of a screw orthogonal to a rotation axis of the screw and a plurality of pieces of lead data including a first lead amount of the screw and a second lead amount of the screw. The shape data and the plurality of pieces of lead data are input in an algorithm that derives a tool path for forming the screw having a helical groove with a variable lead from a workpiece. The tool path is derived by inputting the shape data and the plurality of pieces of lead data into the algorithm.
(4) A program configured to cause a tool path generator or a machine tool system to execute the tool path generation method.

### Effects of Invention

The present invention provides a tool path generator, a machine tool system, a tool path generation method, and a program that make it possible to efficiently generate a tool path for forming a screw having a helical groove with a variable lead.

### Brief Description of Drawings

[FIG. 1] FIG. 1 is a diagram schematically illustrating a tool path generator according to a first embodiment.
[FIG. 2] FIG. 2 is a diagram schematically illustrating the tool path generator according to the first embodiment.
[FIG. 3] FIG. 3 is a diagram schematically illustrating an example of a workpiece.
[FIG. 4] FIG. 4 is a diagram schematically illustrating an example of a screw.
[FIG. 5] FIG. 5 is a diagram schematically illustrating a state in which a computing apparatus derives a tool path, based on shape data, a plurality of pieces of lead data, and an algorithm.
[FIG. 6] FIG. 6 is a diagram schematically illustrating an example of a cross-sectional shape of the screw specified by the shape data.
[FIG. 7] FIG. 7 is a diagram schematically illustrating an example of an image to be displayed on a display.
[FIG. 8] FIG. 8 is a diagram schematically illustrating an example of an image to be displayed on the display.
[FIG. 9] FIG. 9 is a diagram schematically illustrating an example of an image to be displayed on the display.
[FIG. 10] FIG. 10 is a diagram schematically illustrating an example of an image to be displayed on the display.
[FIG. 11] FIG. 11 is a diagram schematically illustrating an example of an image to be displayed on the display.
[FIG. 12] FIG. 12 is a diagram schematically illustrating an example of an image to be displayed on the display.
[FIG. 13] FIG. 13 is a diagram schematically illustrating an example of an image to be displayed on the display.
[FIG. 14] FIG. 14 is a diagram schematically illustrating an example of an image to be displayed on the display.
[FIG. 15] FIG. 15 is a diagram schematically illustrating an example of an image to be displayed on the display.
[FIG. 16] FIG. 16 is a diagram schematically illustrating how a root surface of a helical groove of the screw is cut with a tool.
[FIG. 17] FIG. 17 is a diagram schematically illustrating an example of an image to be displayed on the display.
[FIG. 18] FIG. 18 is a diagram schematically illustrating a part of the image to be displayed on the display.
[FIG. 19] FIG. 19 is a diagram schematically illustrating an example of an image to be displayed on the display.
[FIG. 20] FIG. 20 is a diagram schematically illustrating a part of the screw.
[FIG. 21] FIG. 21 is a diagram schematically illustrating an example of an image to be displayed on the display.
[FIG. 22] FIG. 22 is a diagram schematically illustrating a part of the image to be displayed on the display.
[FIG. 23] FIG. 23 is a diagram schematically illustrating an example of an image to be displayed on the display.
[FIG. 24] FIG. 24 is a diagram schematically illustrating an example of an image to be displayed on the display.
[FIG. 25] FIG. 25 is a diagram schematically illustrating a state in which the computing apparatus derives a second tool path, based on the shape data, the plurality of pieces of lead data, an instruction designating the execution of a reverse mode, and the algorithm.
[FIG. 26] FIG. 26 is a perspective diagram schematically illustrating an example of the screw.
[FIG. 27] FIG. 27 is a perspective diagram schematically illustrating an example of a second workpiece.
[FIG. 28] FIG. 28 is a perspective diagram schematically illustrating an example of a second screw.
[FIG. 29] FIG. 29 is a diagram schematically illustrating an example of an image to be displayed on the display.
[FIG. 30] FIG. 30 is a diagram schematically illustrating an example of an image to be displayed on the display.
[FIG. 31] FIG. 31 is a diagram schematically illustrating the tool path generator according to the first embodiment.
[FIG. 32] FIG. 32 is a diagram schematically illustrating a state in which the computing apparatus derives the tool path, based on the shape data, the plurality of pieces of lead data, and the algorithm.
[FIG. 33] FIG. 33 is a diagram schematically illustrating how a measurement tool measures a machined surface of the screw.
[FIG. 34] FIG. 34 is a diagram schematically illustrating how an orientation of a tool cutting edge is corrected in accordance with changes in the lead.
[FIG. 35] FIG. 35 is a diagram schematically illustrating a machine tool system according to a second embodiment.
[FIG. 36] FIG. 36 is a diagram schematically illustrating the machine tool system according to the second embodiment.
[FIG. 37] FIG. 37 is a perspective diagram schematically illustrating a part of a machine tool.
[FIG. 38] FIG. 38 is a perspective diagram schematically illustrating a part of the machine tool.
[FIG. 39] FIG. 39 is a cross-sectional diagram schematically illustrating a part of the machine tool according to a modification.
[FIG. 40] FIG. 40 is a diagram schematically illustrating a controller.
[FIG. 41] FIG. 41 is a flowchart illustrating an example of a tool path generation method according to a third embodiment.
[FIG. 42] FIG. 42 is a flowchart illustrating an example of a plurality of sub-steps of a tool path derivation step.
[FIG. 43] FIG. 43 is a diagram schematically illustrating an example of a lead table.
[FIG. 44] FIG. 44 is a diagram describing a cross-section information calculation step.
[FIG. 45] FIG. 45 is a table illustrating an example of cross-section information.
[FIG. 46] FIG. 46 is a flowchart illustrating an overview of one of sub-steps of the tool path derivation step.
[FIG. 47] FIG. 47 is a perspective diagram schematically illustrating a part of the machine tool.
[FIG. 48] FIG. 48 is a diagram schematically illustrating an example of a non-volatile storage medium that stores a program.

### Description of Embodiments

Hereinafter, a tool path generator 1, a machine tool system 100, a tool path generation method, a workpiece machining method, and a program PG according to some embodiments will be described with reference to the drawings. Note that, in the following description of the embodiments, identical reference numerals are given to portions and components having identical functions, and descriptions of the portions and components with the identical reference numerals that are deemed redundant will be omitted.

### (First Embodiment)

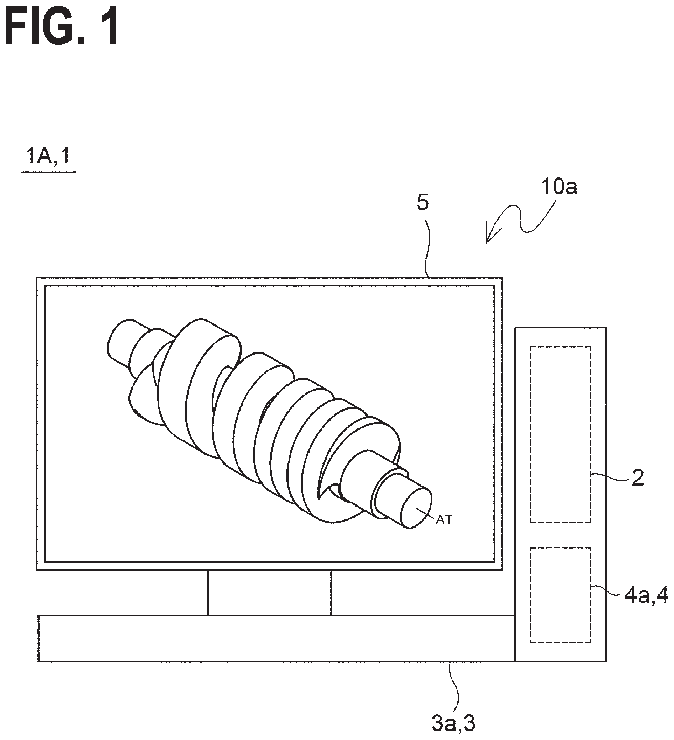

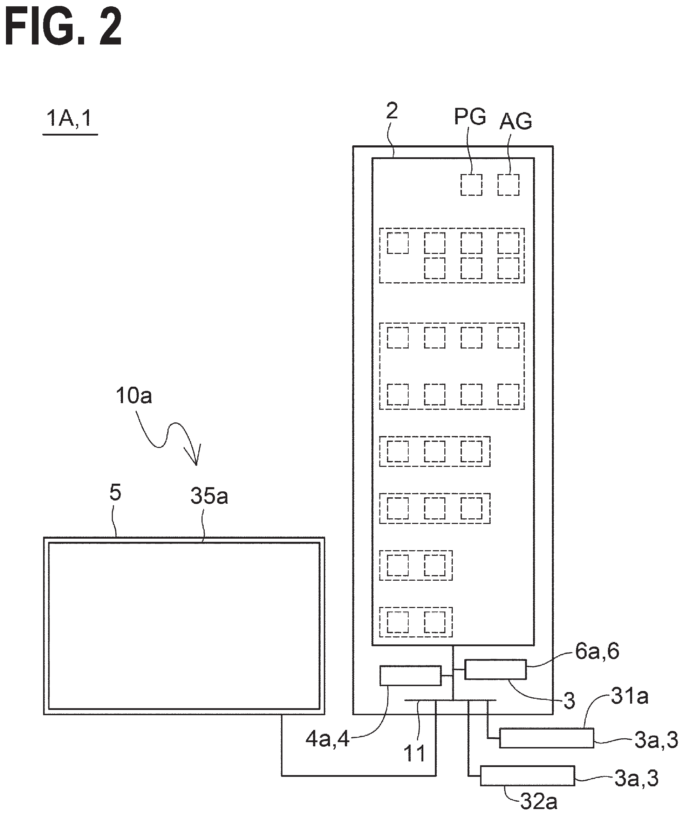

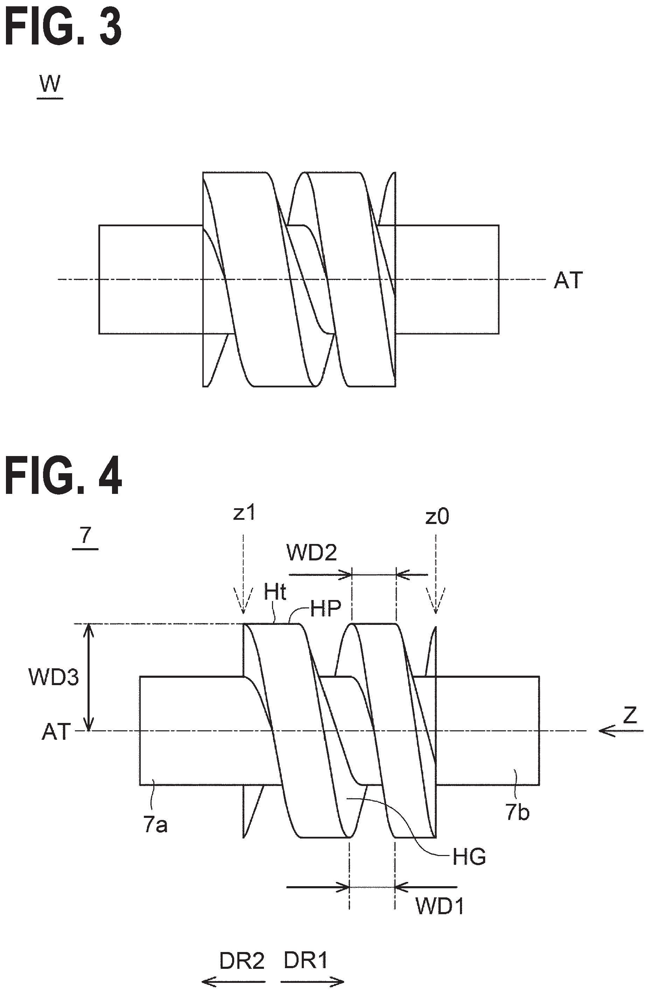

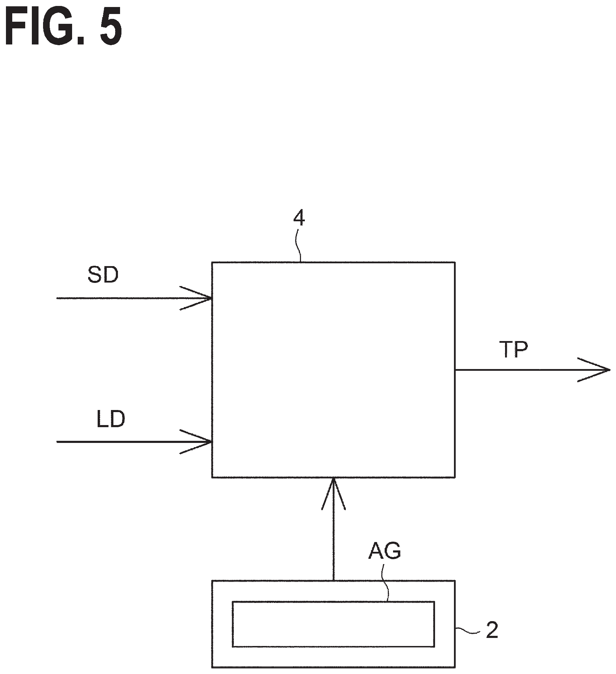

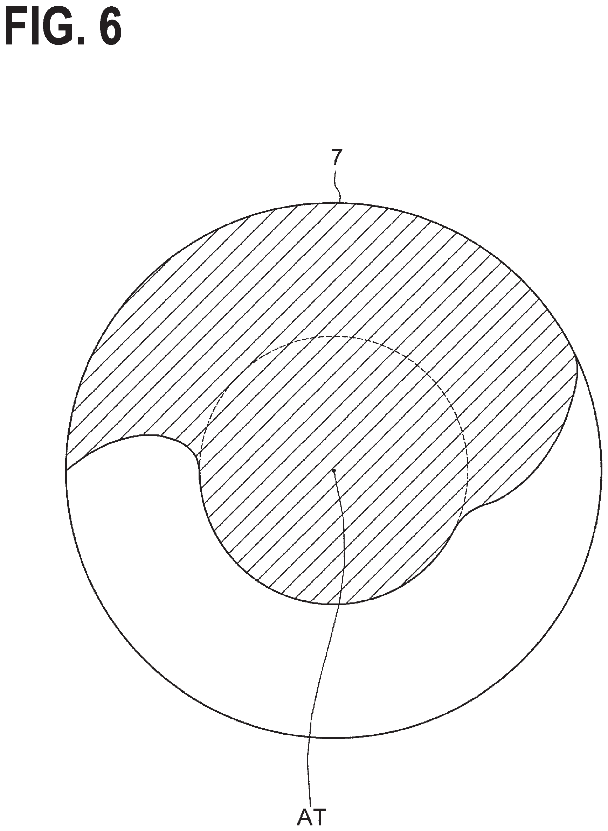

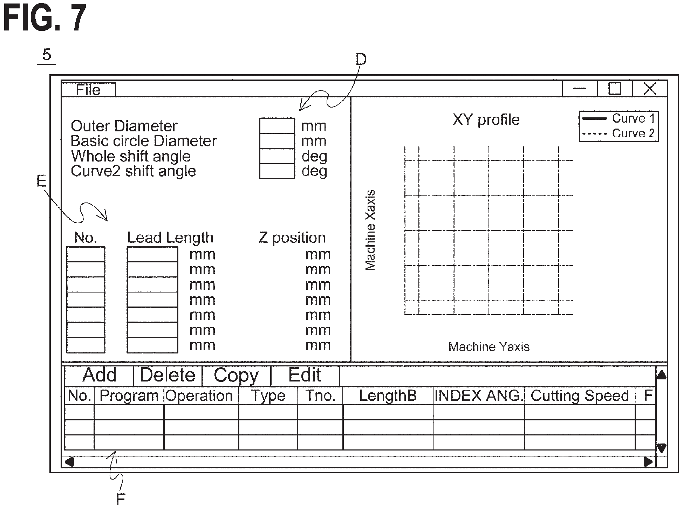

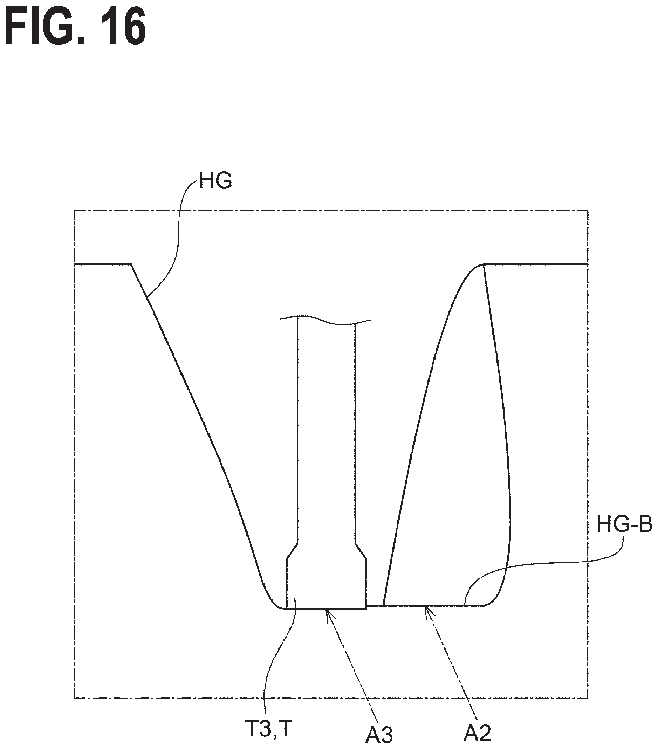

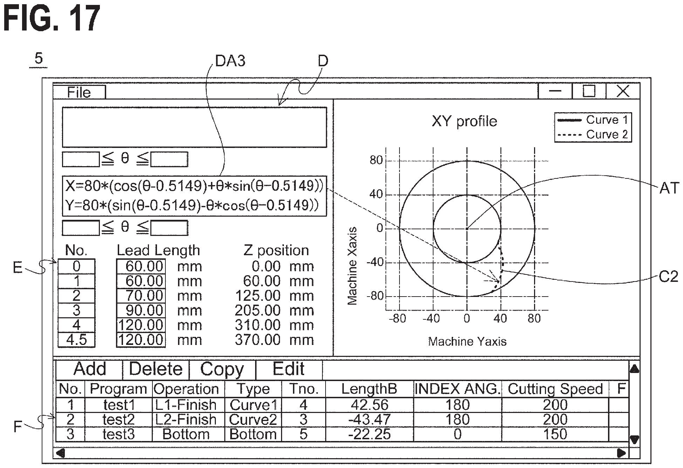

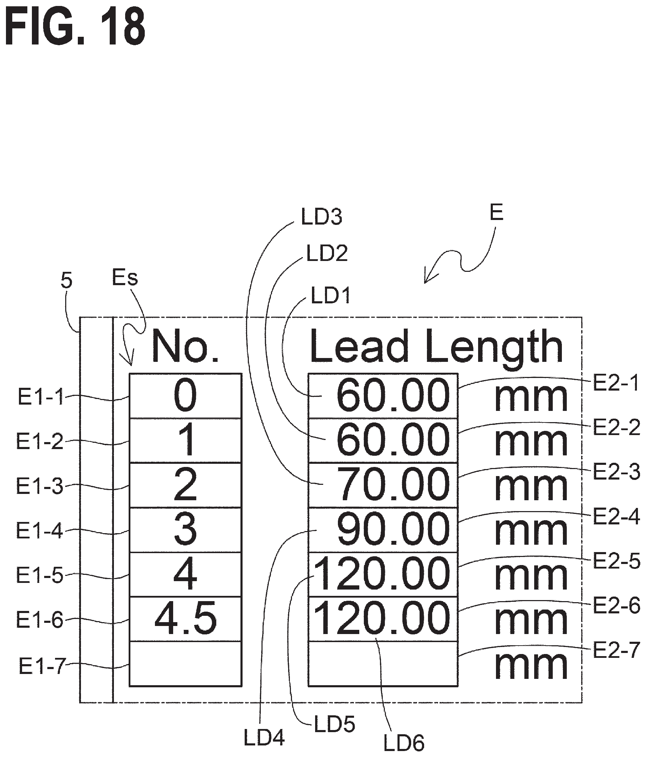

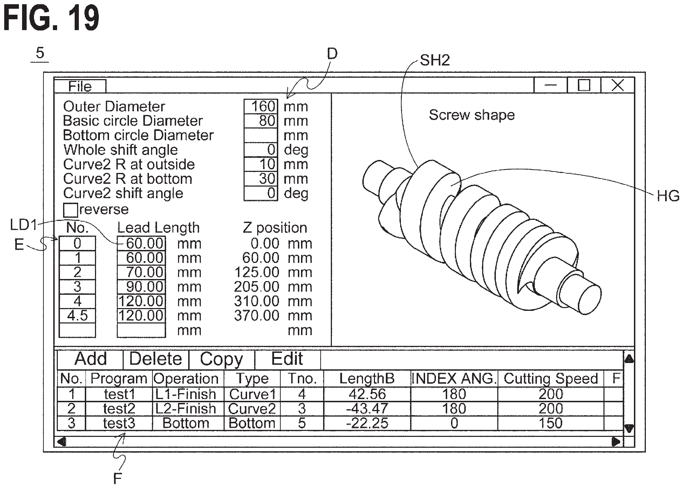

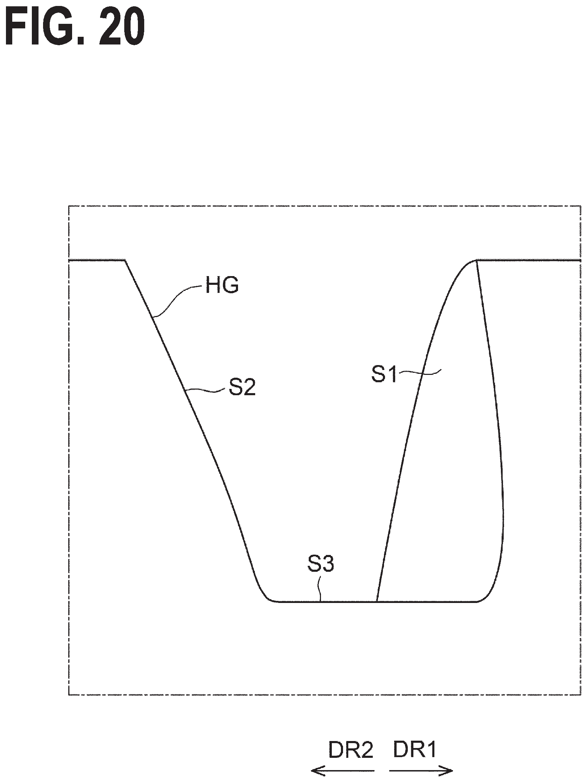

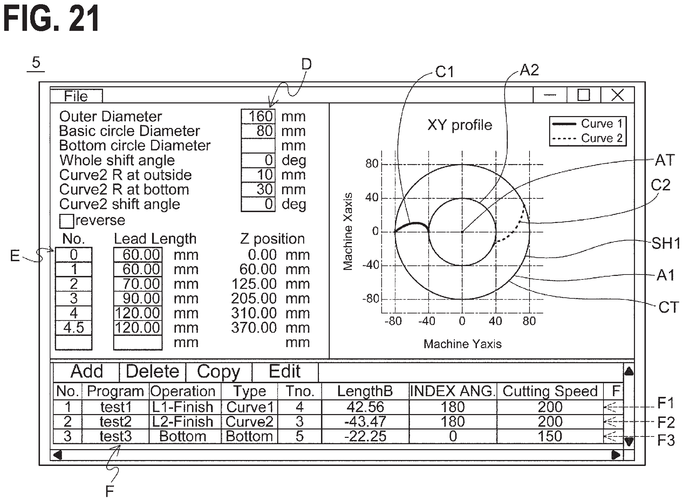

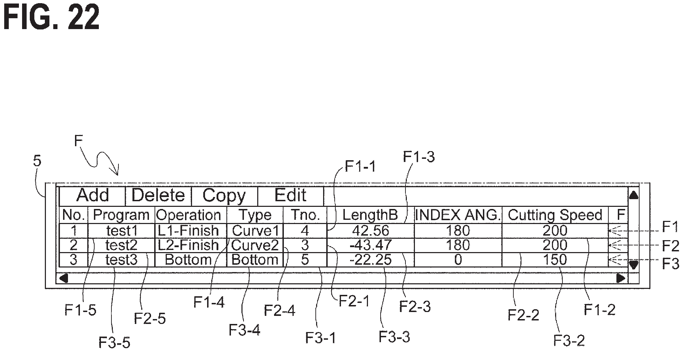

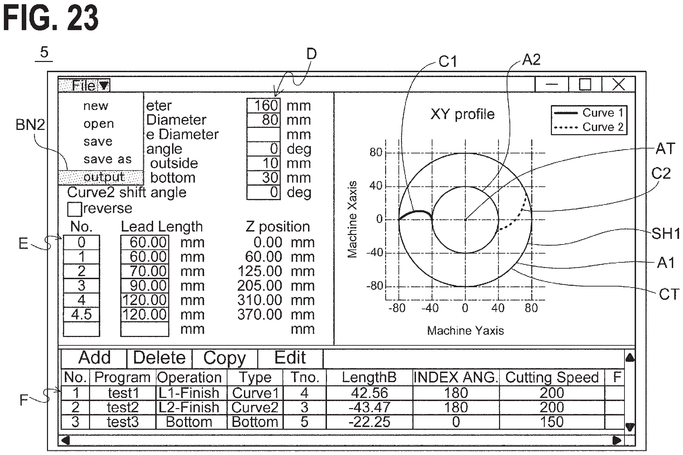

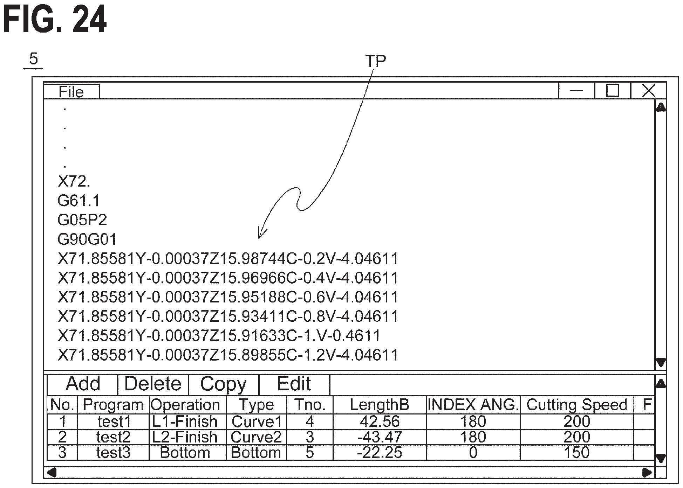

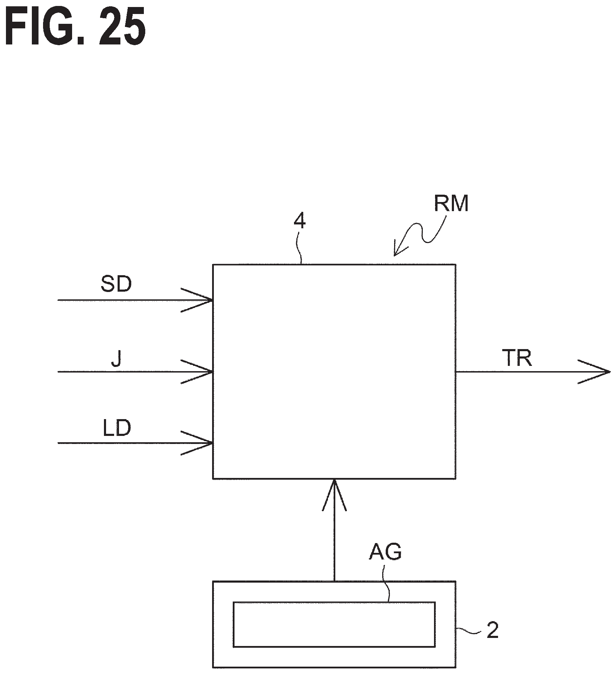

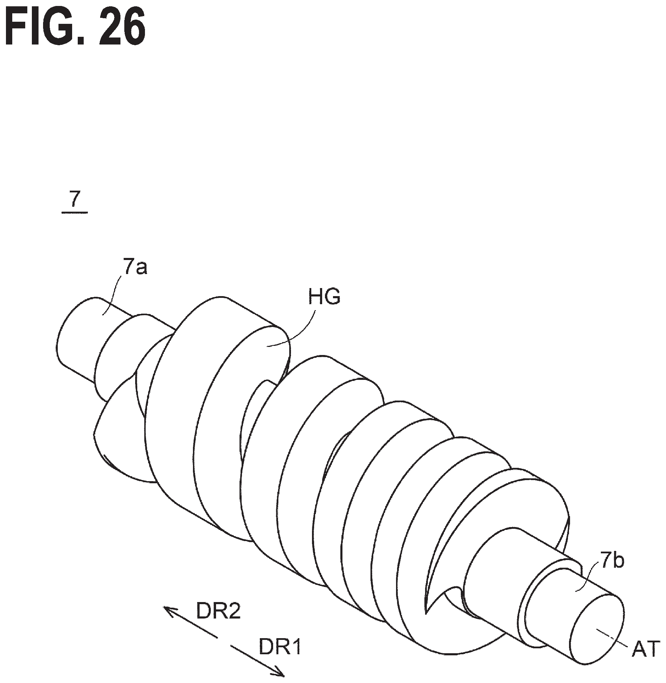

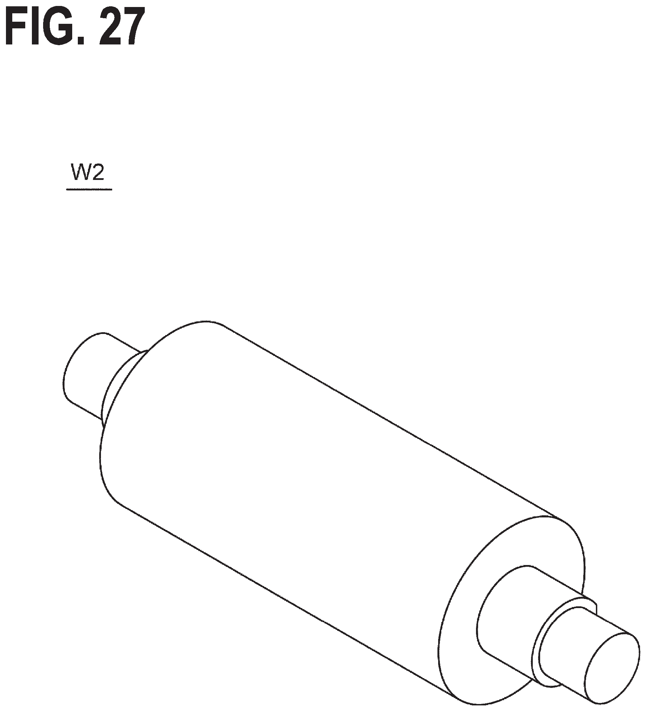

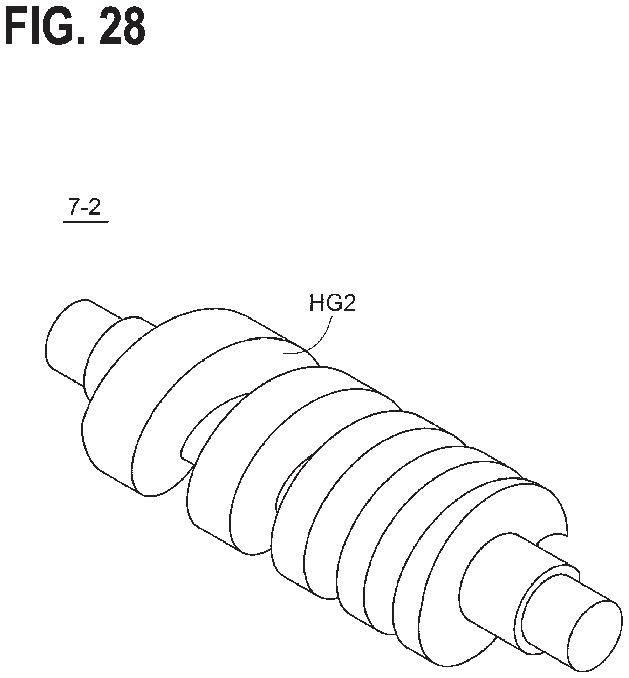

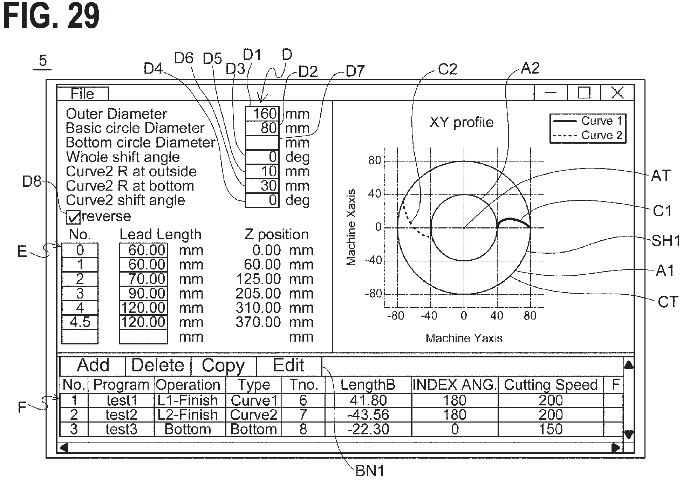

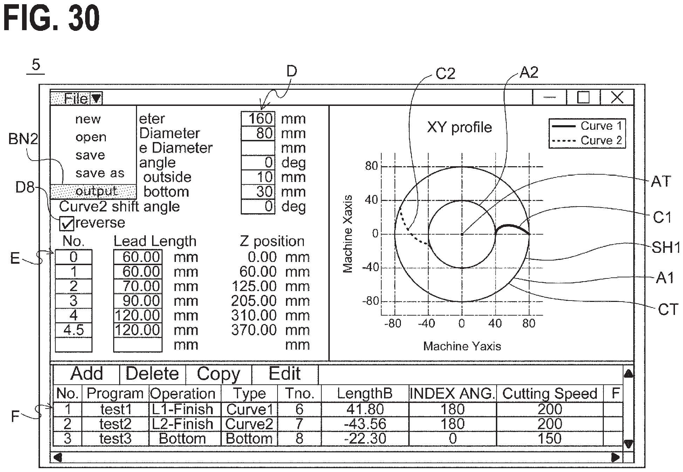

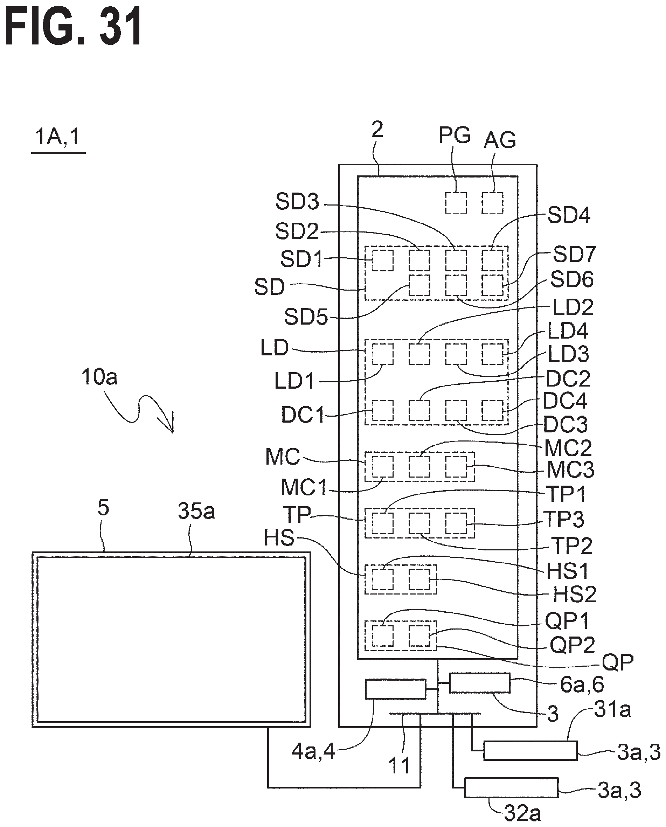

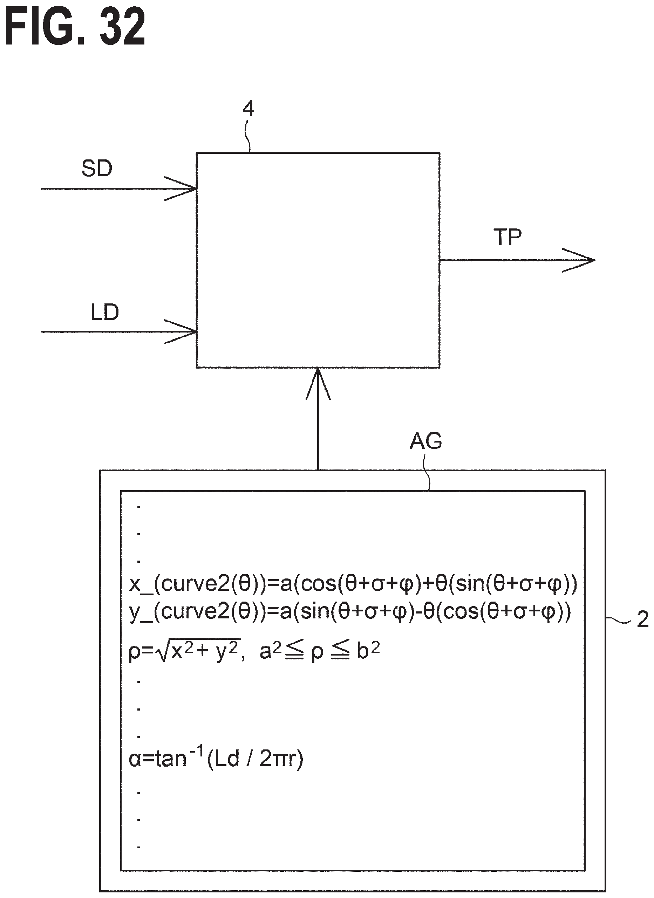

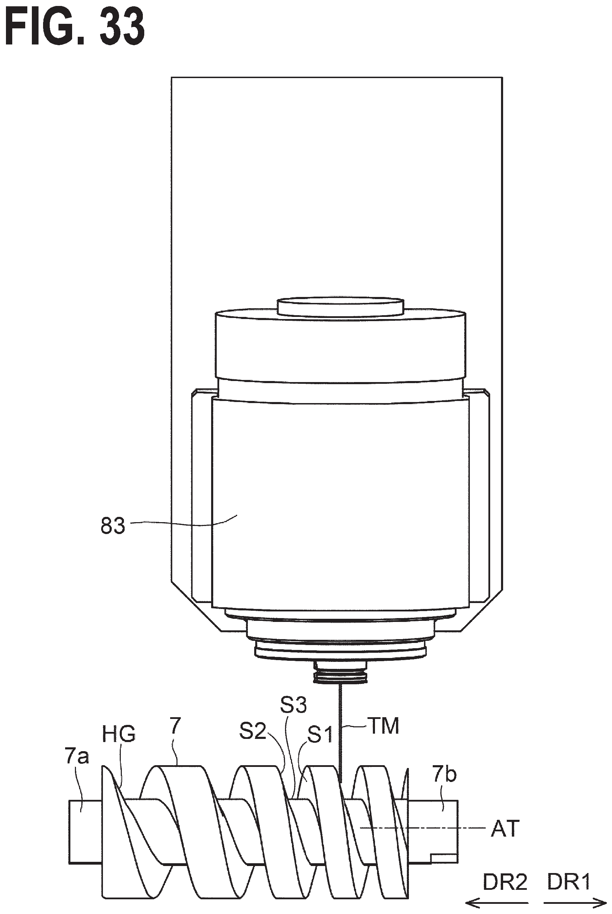

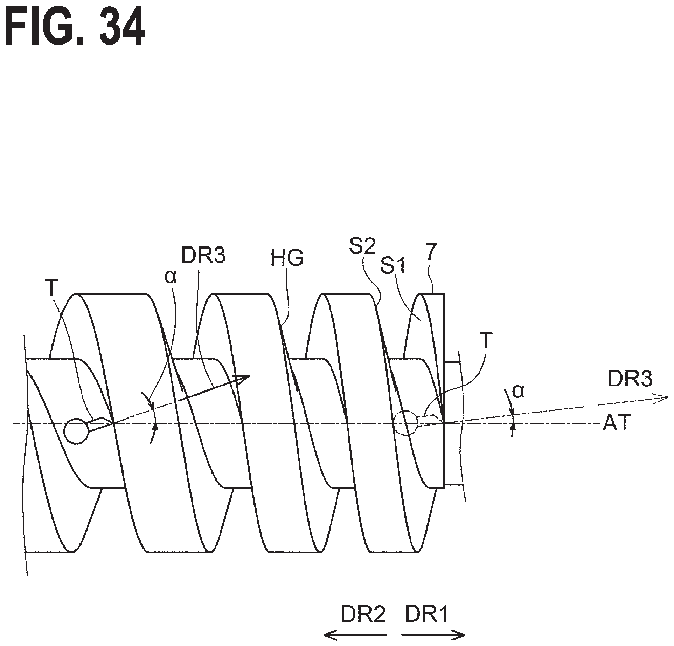

A tool path generator 1A according to a first embodiment will be described with reference to FIGs. 1 to 34. FIGs. 1 and 2 are diagrams schematically illustrating the tool path generator 1A according to the first embodiment. FIG. 3 is a diagram schematically illustrating an example of a workpiece W. FIG. 4 is a diagram schematically illustrating an example of a screw 7. FIG. 5 is a diagram schematically illustrating a state in which a computing apparatus 4 derives a tool path TP, based on shape data SD, a plurality of pieces of lead data LD, and an algorithm AG. FIG. 6 is a diagram schematically illustrating an example of a cross-sectional shape of the screw 7 specified by the shape data SD. FIGs. 7 to 15 are diagrams schematically illustrating examples of an image to be displayed on a display 5. FIG. 16 is a diagram schematically illustrating how a root surface HG-B of a helical groove of the screw 7 is cut with a tool T. FIG. 17 is a diagram schematically illustrating an example of an image to be displayed on the display 5. FIG. 18 is a diagram schematically illustrating a part of the image to be displayed on the display 5. FIG. 19 is a diagram schematically illustrating an example of an image to be displayed on the display 5. FIG. 20 is a diagram schematically illustrating a part of the screw 7. FIG. 21 is a diagram schematically illustrating an example of an image to be displayed on the display 5. FIG. 22 is a diagram schematically illustrating a part of the image to be displayed on the display 5. FIGs. 23 and 24 are diagrams schematically illustrating an example of an image to be displayed on the display 5. FIG. 25 is a diagram schematically illustrating a state in which the computing apparatus 4 derives a second tool path TR, based on the shape data SD, the plurality of pieces of lead data LD, an instruction J designating execution of a reverse mode RM, and the algorithm AG. FIG. 26 is a perspective diagram schematically illustrating an example of the screw 7. FIG. 27 is a perspective diagram schematically illustrating an example of a second workpiece W2. FIG. 28 is a perspective diagram schematically illustrating an example of a second screw 7-2. FIGs. 29 and 30 are diagrams schematically illustrating an example of an image to be displayed on the display 5. FIG. 31 is a diagram schematically illustrating the tool path generator 1A according to the first embodiment. FIG. 32 is a diagram schematically illustrating a state in which the computing apparatus 4 derives the tool path TP, based on the shape data SD, the plurality of pieces of lead data LD, and the algorithm AG. FIG. 33 is a diagram schematically illustrating how a measurement tool TM measures a machined surface of the screw 7. FIG. 34 is a diagram schematically illustrating how an orientation of a cutting edge of the tool T is corrected in accordance with changes in the lead.

As illustrated in FIG. 1, the tool path generator 1A includes a memory 2, an interface 3 (for example, a user interface 3a), and a computing apparatus 4. The tool path generator 1A may include the display 5.

As illustrated in FIG. 2, the memory 2 stores the algorithm AG that derives a tool path for forming a screw having a helical groove with a variable lead from a workpiece. FIG. 3 illustrates an example of the workpiece W, and FIG. 4 illustrates an example of the screw 7 having a helical groove HG with a variable lead to be formed from the workpiece W. In the example illustrated in FIG. 3, the workpiece W is a workpiece that has been roughly machined. Alternatively, the workpiece W may be a block that has not been roughly machined (for example, refer to FIG. 27). The workpiece W may be a casting.

In the description, the lead refers to the distance the helical groove HG of the screw 7 moves along a rotation axis AT when the screw 7 is rotated once about the rotation axis AT. In the screw 7 having the helical groove HG with a variable lead, the lead changes along the rotation axis AT of the screw 7.

In the example illustrated in FIG. 4, the lead of the screw 7 at the position where a Z-coordinate is z0 is referred to as a first lead amount (for example, 60 mm), and the lead of the screw 7 at the position where the Z-coordinate is z1 is referred to as a second lead amount (for example, 90 mm). In the description, the lead refers to a lead at a predetermined position of the screw. In the example illustrated in FIG. 4, the first lead amount is the lead of the screw 7 at the position where the Z-coordinate is z0 (in other words, the lead of the helical groove HG at the position where the Z-coordinate is z0), and the second lead amount is the lead of the screw 7 at the position where the Z-coordinate is z1 (in other words, the lead of the helical groove HG at the position where the Z-coordinate is z1). Note that, in the description, the Z-coordinate refers to a coordinate in a Z direction that is a direction along the rotation axis AT of the screw 7.

In the example illustrated in FIG. 4, when the Z-coordinate changes from z0 to z1, the helical groove HG is rotated twice about a central axis of the screw. Further, in the example illustrated in FIG. 4, when the Z-coordinate changes from z0 to z1, the lead continuously increases. In this case, it is possible to calculate (z1 - z0) by, for example, multiplying the average value of the first lead amount and the second lead amount by two. For example, as indicated by the following expression, the lead distance is 150 mm. 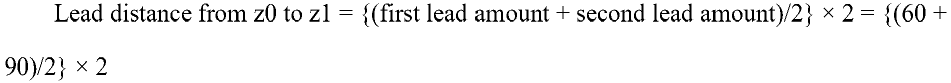 Lead distance from z0 to z1 = {(first lead amount + second lead amount)/2} × 2 = {(60 + 90)/2} × 2

As illustrated in FIG. 5, the algorithm AG is an algorithm that derives the above-described tool path TP (in other words, the tool path TP for forming the screw 7 having the helical groove HG with a variable lead from the workpiece W), based on (1) the shape data SD specifying the cross-sectional shape of the screw orthogonal to the rotation axis AT (refer to FIG. 4) of the screw 7 and (2) the plurality of pieces of lead data LD including the first lead amount (for example, 60 mm) of the screw 7 and the second lead amount (for example, 90 mm) of the screw 7.

FIG. 6 illustrates an example of the cross-sectional shape of the screw 7 specified by the shape data SD (more specifically, the cross-sectional shape of the screw 7 orthogonal to the rotation axis AT of the screw 7).

In the example illustrated in FIG. 2, the interface 3 (for example, the user interface 3a) receives input including the above-described shape data SD and the plurality of pieces of lead data LD including the first lead amount of the screw 7 and the second lead amount of the screw 7. The user interface 3a that receives the input of the above-described shape data SD and the above-described plurality of pieces of lead data LD may include a keyboard 31a, a pointing device 32a such as a mouse, or other devices (for example, a touch panel 35a on the display 5).

Alternatively or additionally, the interface 3 may be a communication interface. In this case, the communication interface receives input including the above-described shape data SD and the above-described plurality of pieces of lead data LD via a communication network.

As illustrated in FIG. 5, the computing apparatus 4 derives the tool path TP by inputting the above-described shape data SD and the above-described plurality of pieces of lead data LD in the above-described algorithm AG.

In the tool path generator 1A according to the first embodiment, the computing apparatus 4 derives the tool path TP, based on the above-described shape data SD and the above-described plurality of pieces of lead data LD. Thus, it is possible to efficiently generate the tool path TP for forming the screw 7 having the helical groove HG with a variable lead.

### (Optional Additional Structures)

Next, optional additional structures that can be employed by the tool path generator 1A according to the first embodiment will be described with reference to FIGs. 1 to 34.

### (Screw 7)

In the description, the screw 7 constitutes a part of a pump (for example, a vacuum pump) and is a screw that comes into contact with fluid. In other words, the screw 7 is a screw of the pump (for example, the vacuum pump). Alternatively, the screw 7 in the description may be a screw for use other than the pump.

The pump may include the second screw 7-2 (refer to FIG. 28) in addition to the screw 7 (refer to FIG. 26). More specifically, the screw 7 in the description may be one of screws of a twin screw pump. Additionally, the second screw 7-2 in the description may be the other one of the screws of the twin screw pump.

As illustrated in FIG. 4, the helical groove HG of the screw 7 may be constituted by a single-start groove. Additionally, as illustrated in FIG. 4, a width WD1 of the single-start groove may change along the rotation axis AT of the screw 7. As illustrated in FIG. 4, a width WD2 of a helical ridge HP defined by the helical groove HG may change along the rotation axis AT of the screw 7.

As illustrated in FIG. 4, a distance WD3 between a crest Ht of the helical ridge HP, which is defined by the helical groove HG of the screw 7, and the rotation axis AT of the screw 7 may be constant along the rotation axis AT of the screw 7.

### (Tool Path Generator 1A)

The tool path generator 1A includes at least one computer. As illustrated in FIG. 1, the tool path generator 1A may include a CAD/CAM system 10a. Note that, the CAD is an abbreviation for "Computer-Aided Design", and the CAM is an abbreviation for "Computer-Aided Manufacturing". The CAD/CAM system 10a is capable of creating a part drawing and is capable of generating a tool path of a part corresponding to the part drawing, based on the created part drawing.

As illustrated in FIG. 2, the tool path generator 1A (for example, the CAD/CAM system 10a) includes the memory 2, the interface 3 (more specifically, the user interface 3a), the computing apparatus 4, the display 5, and the communication circuit 6 (more specifically, a communication interface 6a). As illustrated in FIG. 2, the memory 2, the interface 3 (more specifically, the user interface 3a), the computing apparatus 4, the display 5, and the communication circuit 6 (more specifically, the communication interface 6a) are coupled to each other via a bus 11.

### (Display 5)

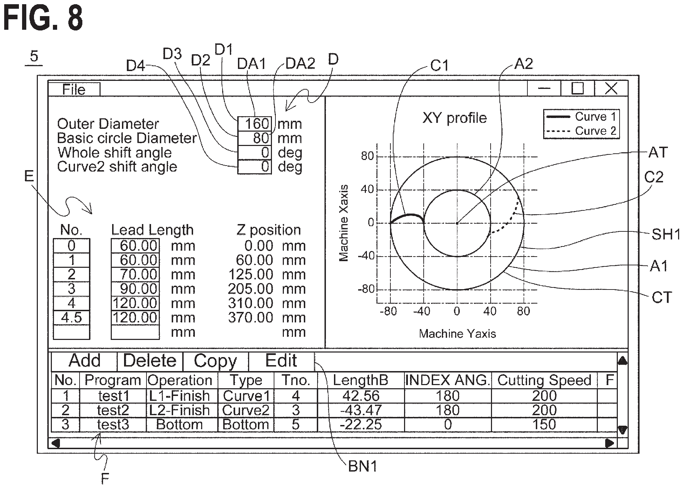

In the example illustrated in FIG. 2, the tool path generator 1A includes the display 5. As illustrated in FIGs. 7 and 8, the display 5 displays a shape data input field D that is an input field for data (that is, the above-described shape data SD) specifying the cross-sectional shape of the screw 7 orthogonal to the rotation axis AT of the screw 7. Additionally, the display 5 displays a lead data input field E that is an input field for the plurality of pieces of lead data LD. The display 5 may display a machining condition input field F that is an input field for tool information and a machining parameter.

When the shape data input field D and the lead data input field E are displayed on the display 5, it is possible for an operator to easily input the shape data SD, which specifies the cross-sectional shape of the screw 7, and the plurality of pieces of lead data LD in the tool path generator 1A via the interface 3 (more specifically, the user interface 3a). In the example illustrated in FIGs. 7 and 8, the display 5 displays the shape data input field D and the lead data input field E at the same time.

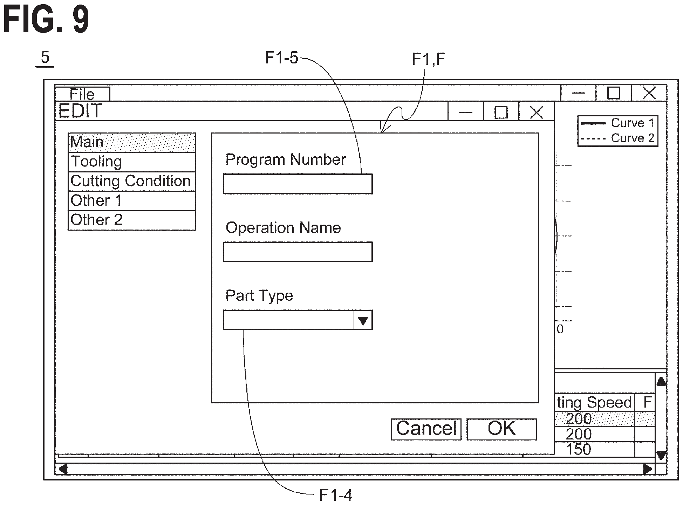

The display 5 may be configured to display the shape data input field D, the lead data input field E, and the machining condition input field F at the same time. Alternatively, the display 5 may be configured to selectively display the shape data input field D, the lead data input field E, and the machining condition input field F. As illustrated in FIGs. 9 to 11, the machining condition input field F may be configured to be displayed on the display 5 as a popup in response to an edit button BN1 (refer to FIG. 8) being pressed or clicked.

In the example illustrated in FIG. 8, the cross-sectional shape of the screw orthogonal to the rotation axis AT of the screw 7 is defined by a plurality of lines (more specifically, a plurality of curves) including an outer circle A1, an inner circle A2, a first curve C1 that couples the outer circle A1 and the inner circle A2, and a second curve C2 that couples the outer circle A1 and the inner circle A2.

In the example illustrated in FIG. 8, the computing apparatus 4 derives a cross-sectional shape SH1 of the screw orthogonal to the rotation axis AT of the screw 7, based on predefined shapes that have been previously set (for example, the predefined shapes including the outer circle A1, the inner circle A2, the first curve C1 including a trochoid, the second curve C2 including an involute) and dimension data of the predefined shapes (for example, dimension data DA1 of the outer circle A1 and dimension data DA2 of the inner circle A2). In the example illustrated in FIG. 8, the cross-sectional shape SH1 of the screw derived based on the shape data input in the shape data input field D is displayed on the display 5. The shape data input field D and the derived cross-sectional shape SH1 may be displayed on the display 5 at the same time. Further, the correspondence relationship between parameters input in the shape data input field D (for example, input fields to be described later (D1, D2, D3, and D4)) and numerical values indicating the sizes of the derived cross-sectional shape SH1 or the arrangement of the first curve C1 and the second curve C2 in the derived cross-sectional shape SH1 may be displayed on the display 5.

In the example illustrated in FIG. 8, the shape data input field D includes an input field (hereinafter, referred to as a "first input field D1") for the size of the outer circle A1 (more specifically, the diameter of the outer circle A1) of the screw 7. Additionally, the shape data input field D includes an input field (hereinafter, referred to as a "second input field D2") for the size of the inner circle A2 (more specifically, the diameter of the inner circle A2) of the screw 7.

The shape data input field D may include an input field (hereinafter, referred to as a "third input field D3") for a first shift amount indicating a rotational phase of the first curve C1, which couples the outer circle A1 and the inner circle A2, and the second curve C2, which couples the outer circle A1 and the inner circle A2, about the rotation axis AT.

The shape data input field D may include an input field (hereinafter, referred to as a "fourth input field D4") for a second shift amount indicating a relative rotational phase between the first curve C1, which couples the outer circle A1 and the inner circle A2, and the second curve C2, which couples the outer circle A1 and the inner circle A2, about the rotation axis AT. Alternatively, the fourth input field D4 may be omitted.

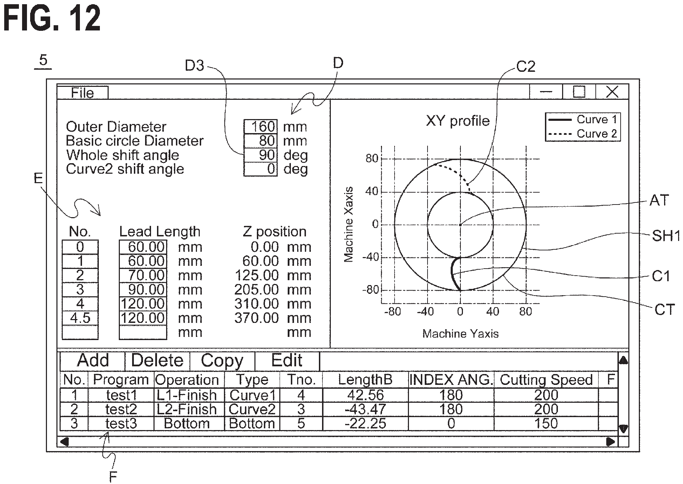

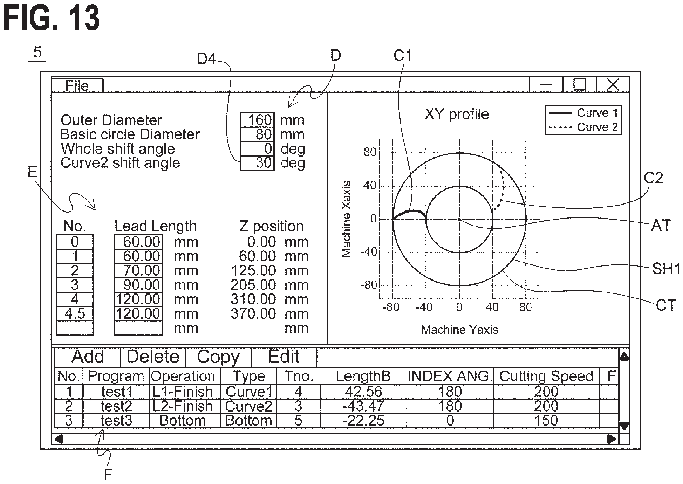

By referring to FIGs. 8 and 12, it is possible to grasp the relationship between the numerical value input in the third input field D3, which is the input field for the first shift amount, and the cross-sectional shape SH1 of the screw 7. By referring to FIGs. 8 and 13, it is possible to grasp the relationship between the numerical value input in the fourth input field D4, which is the input field for the second shift amount, and the cross-sectional shape SH1 of the screw 7.

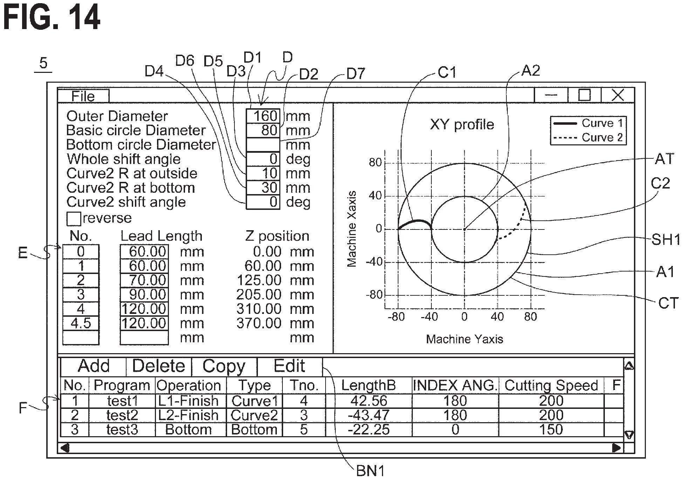

As illustrated in FIG. 14, the shape data input field D may include an input field (hereinafter, referred to as a "fifth input field D5") for a numerical value specifying the degree of roundness of the outer end portion of the second curve C2 (more specifically, the second curve C2, which couples the outer circle A1 and the inner circle A2). In the example illustrated in FIG. 14, the curvature radius of the outer end portion of the second curve C2 is set to 10 mm. The fifth input field D5 may be omitted.

As illustrated in FIG. 14, the shape data input field D may include an input field (hereinafter, referred to as a "sixth input field D6") for a numerical value specifying the degree of roundness of the inner end portion of the second curve C2 (more specifically, the second curve C2, which couples the outer circle A1 and the inner circle A2). In the example illustrated in FIG. 14, the curvature radius of the inner end portion of the second curve C2 is set to 30 mm. The sixth input field D6 may be omitted.

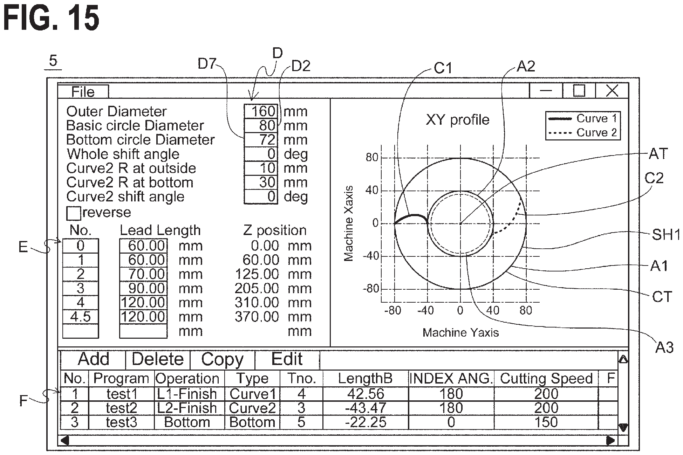

As illustrated in FIG. 15, the shape data input field D may include an input field (hereinafter, referred to as a "seventh input field D7") for the size of a bottom circle A3 (more specifically, the diameter of the bottom circle A3) of the screw 7. The bottom circle A3 of the screw 7 is positioned inside the inner circle A2 of the screw 7. In this case, as illustrated in FIG. 16, the root surface HG-B of the helical groove HG of the screw 7 is to be cut by a tool to a position corresponding to the bottom circle A3. The seventh input field D7 may be omitted.

In the example illustrated in FIGs. 8 to 15, the dimension data of the predefined shape that has been previously set is input in the shape data input field D. Alternatively or additionally, as illustrated in FIG. 17, numerical expression data DA3 may be input in the shape data input field D. Further, the computing apparatus 4 may derive the cross-sectional shape SH1 of the screw orthogonal to the rotation axis AT of the screw 7, based on the numerical expression data DA3 input in the shape data input field D.

In the example illustrated in FIG. 18, the lead data input field E includes an input field E2-1 for a first lead amount LD1 and an input field E2-2 for a second lead amount LD2. The lead data input field E may include an input field E2-3 for a third lead LD3 and/or an input field E2-4 for a fourth lead LD4. The lead data input field E may include an input field E2-5 for a fifth lead LD5 and/or an input field E2-6 for a sixth lead LD6. The lead data input field E may include an input field E2-7 for a seventh lead.

In the example illustrated in FIG. 18, the lead data input field E includes an input field (in other words, a setting position input field Es) for a numerical value indicating a setting position of the lead. More specifically, the lead data input field E includes an input field E1-1 for a first numerical value indicating the setting position of the first lead amount LD1 and an input field E1-2 for a second numerical value indicating the setting position of the second lead amount LD2. In the example illustrated in FIG. 18, the setting position of the first lead amount LD1 is a reference position, and the first numerical value indicating the setting position of the first lead amount LD1 is "0", which indicates the reference position. Note that, the input field E1-1 for the first numerical value may be omitted (for example, the first numerical value may be fixed to "0").

In the example illustrated in FIG. 18, the setting position of the second lead amount LD2 is the position rotated once about the rotation axis AT of the screw 7 along the helical groove from the reference position. Additionally, the second numerical value indicating the setting position of the second lead amount LD2 is "1", which indicates the position rotated once about the rotation axis AT from the reference position.

The lead data input field E may include an input field E1-3 for a third numerical value indicating the setting position of the third lead LD3 and/or an input field E1-4 for a fourth numerical value indicating the setting position of the fourth lead LD4. In the example illustrated in FIG. 18, the setting position of the third lead LD3 is the position rotated twice about the rotation axis AT of the screw 7 along the helical groove from the reference position. Additionally, the third numerical value indicating the setting position of the third lead LD3 is "2", which indicates the position rotated twice about the rotation axis AT from the reference position. In the example illustrated in FIG. 18, the setting position of the fourth lead LD4 is the position rotated three times about the rotation axis AT of the screw 7 along the helical groove from the reference position. Additionally, the fourth numerical value indicating the setting position of the fourth lead LD4 is "3", which indicates the position rotated three times about the rotation axis AT from the reference position.

The lead data input field E may include an input field E1-5 for a fifth numerical value indicating the setting position of the fifth lead LD5 and/or an input field E1-6 for a sixth numerical value indicating the setting position of the sixth lead LD6. In the example illustrated in FIG. 18, the setting position of the fifth lead LD5 is the position rotated four times about the rotation axis AT of the screw 7 along the helical groove from the reference position. Additionally, the fifth numerical value indicating the setting position of the fifth lead LD5 is "4", which indicates the position rotated four times about the rotation axis AT from the reference position. In the example illustrated in FIG. 18, the setting position of the sixth lead LD6 is the position rotated 4.5 times about the rotation axis AT of the screw 7 along the helical groove from the reference position. Additionally, the sixth numerical value indicating the setting position of the sixth lead LD6 is "4.5", which indicates the position rotated 4.5 times about the rotation axis AT from the reference position.

The lead data input field E may include an input field E1-7 for a seventh numerical value indicating the setting position of the seventh lead.

A value obtainable by subtracting the above-described first numerical value from the above-described second numerical value is allowed to be different from a value obtainable by subtracting the above-described second numerical value from the above-described third numerical value. Further, each of the second numerical value and the third numerical value may be an integer or a decimal. In this case, there is a high degree of flexibility in the setting position of the lead.

In the example illustrated in FIG. 18, the input field (in other words, the setting position input field Es) for a numerical value indicating the setting position of the lead allows a rotational angle interval between the adjacent two setting positions about the rotation axis AT to be set optionally. In this case, there is a high degree of flexibility in the setting position of the lead.

As illustrated in FIG. 19, the display 5 may display a first value indicating the Z-coordinate of the setting position of the first lead amount LD1. In the example illustrated in FIG. 19, the first value is "0". The display 5 may display a second value indicating the Z-coordinate of the setting position of the second lead amount LD2. In the example illustrated in FIG. 19, the second value is "60". The display 5 may display a third value indicating the Z-coordinate of the setting position of the third lead LD3. In the example illustrated in FIG. 19, the third value is "125". The display 5 may display a fourth value indicating the Z-coordinate of the setting position of the fourth lead LD4. In the example illustrated in FIG. 19, the fourth value is "205". The display 5 may display a fifth value indicating the Z-coordinate of the setting position of the fifth lead LD5. In the example illustrated in FIG. 19, the fifth value is "310". The display 5 may display a sixth value indicating the Z-coordinate of the setting position of the sixth lead LD6. In the example illustrated in FIG. 19, the sixth value is "370".

The computing apparatus 4 may derive the three-dimensional shape of the screw 7, based on a plurality of pieces of data input in the shape data input field D and the lead data input field E. As illustrated in FIG. 19, the display 5 may display a three-dimensional shape SH2 of the screw 7 that has been derived.

As illustrated in FIG. 26, in the description, a direction from a first end portion 7a of the screw 7 toward a second end portion 7b of the screw 7 is defined as a first direction DR1, and a direction from the second end portion 7b of the screw 7 toward the first end portion 7a of the screw 7 may be defined as a second direction DR2.

In the example illustrated in FIG. 20, the helical groove HG of the screw 7 is defined by a helical side surface (hereinafter, referred to as a "first helical side surface S1") on the side toward the first direction DR1, a helical side surface (hereinafter, referred to as a "second helical side surface S2") on the side toward the second direction DR2, and a helical root surface S3 that couples the first helical side surface S1 and the second helical side surface S2. Each of the first helical side surface S1 and the second helical side surface S2 is a machined surface formed by cutting. Additionally, the helical root surface S3 may be a machined surface formed by cutting.

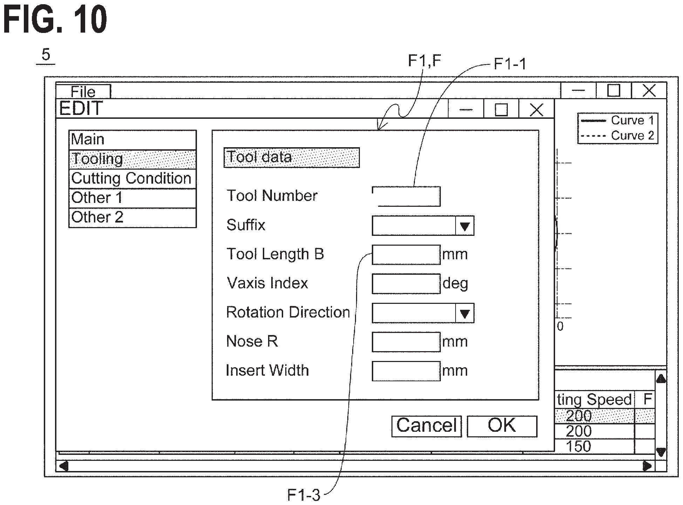

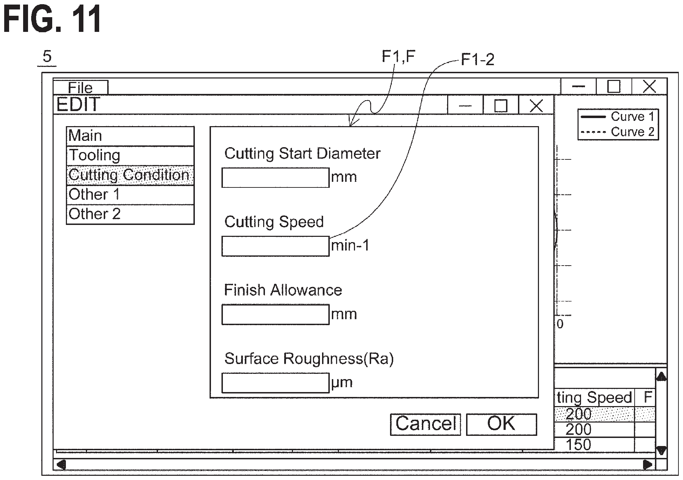

As illustrated in FIG. 21, the machining condition input field F may include a first machining condition input field F1 that is an input field for the machining condition of the first helical side surface S1 of the screw 7. As illustrated in FIG. 22 (or as illustrated in FIG. 10), the first machining condition input field F1 may include an input field F1-1 for data specifying a first tool that machines the first helical side surface S1. As illustrated in FIG. 22 (or as illustrated in FIG. 11), the first machining condition input field F1 may include an input field F1-2 for a machining parameter (such as a cutting speed) of the first helical side surface S1. As illustrated in FIG. 22 (or as illustrated in FIG. 10), the first machining condition input field F1 may include an input field F1-3 for a tool parameter (such as a tool length) of the first tool. As illustrated in FIG. 22 (or as illustrated in FIG. 9), the first machining condition input field F1 may include an input field F1-4 for an identifier (for example, "Curve 1") specifying the first helical side surface S1. Further, the first machining condition input field F1 may include an input field F1-5 for a name of a machining program for machining the first helical side surface S1.

As illustrated in FIG. 21, the machining condition input field F may include a second machining condition input field F2 that is an input field for the machining condition of the second helical side surface S2 of the screw 7. As illustrated in FIG. 22, the second machining condition input field F2 may include an input field F2-1 for data specifying a second tool that machines the second helical side surface S2. As illustrated in FIG. 22, the second machining condition input field F2 may include an input field F2-2 for a machining parameter (such as a cutting speed) of the second helical side surface S2. As illustrated in FIG. 22, the second machining condition input field F2 may include an input field F2-3 for a tool parameter (such as a tool length) of the second tool. As illustrated in FIG. 22, the second machining condition input field F2 may include an input field F2-4 for an identifier (for example, "Curve 2") specifying the second helical side surface S2. Further, the second machining condition input field F2 may include an input field F2-5 for a name of a machining program for machining the second helical side surface S2.

As illustrated in FIG. 21, the machining condition input field F may include a third machining condition input field F3 that is an input field for the machining condition of the helical root surface S3 of the screw 7. As illustrated in FIG. 22, the third machining condition input field F3 may include an input field F3-1 for data specifying a third tool that machines the helical root surface S3. As illustrated in FIG. 22, the third machining condition input field F3 may include an input field F3-2 for a machining parameter (such as a cutting speed) of the helical root surface S3. As illustrated in FIG. 22, the third machining condition input field F3 may include an input field F3-3 for a tool parameter (such as a tool length) of the third tool. As illustrated in FIG. 22, the third machining condition input field F3 may include an input field F3-4 for an identifier (for example, "Bottom") specifying the helical root surface S3. Further, the third machining condition input field F3 may include an input field F3-5 for the name of the machining program for machining the helical root surface S3.

The computing apparatus 4 derives the tool path TP by inputting the plurality of pieces of data input in the shape data input field D (refer to FIG. 8 or 14) and the lead data input field E (refer to FIG. 8 or 14) into the algorithm AG. The computing apparatus 4 may derive the tool path TP by inputting a plurality of pieces of data input in the shape data input field D, the lead data input field E, and the machining condition input field F into the algorithm AG.

In the example illustrated in FIG. 23, the computing apparatus 4 may derive the tool path TP in response to an output button BN2 (more specifically, the output button BN2 displayed on the display 5) being pressed or clicked. More specifically, the computing apparatus 4 may derive the tool path TP in response to the output button BN2 being pressed or clicked, based on the plurality of pieces of data input in the shape data input field D, the lead data input field E, and the machining condition input field F and the algorithm AG that processes the plurality of pieces of data.

In the example illustrated in FIG. 23, the tool path TP is automatically derived in response to the shape data SD, which specifies the cross-sectional shape of the screw, and the plurality of pieces of lead data LD being input via the interface 3, and thereafter the output button BN2 being pressed or clicked. This reduces the operator's workload in creating the tool path TP for forming the screw 7 having the helical groove HG with a variable lead. This also makes it possible to efficiently generate the tool path TP for forming the screw 7 having the helical groove HG with a variable lead.

FIG. 24 illustrates an example of the tool path TP that has been derived. The display 5 may display the tool path TP derived by the computing apparatus 4.

### (Reverse Mode RM)

In the example illustrated in FIG. 25, the computing apparatus 4 is capable of executing the reverse mode RM in which the second tool path TR is derived, based on the shape data SD (more specifically, the shape data SD, which specifies the cross-sectional shape of the screw 7 orthogonal to the rotation axis AT of the screw 7), the plurality of pieces of lead data LD, and the instruction J designating the execution of the reverse mode RM. The second tool path TR is for forming the second screw 7-2 having a second helical groove HG2 (refer to FIG. 28) that is in a mirror-image relationship with the helical groove HG (refer to FIG. 26) from the second workpiece W2. FIG. 27 illustrates an example of the second workpiece W2, and FIG. 28 illustrates an example of the second screw 7-2 having the second helical groove HG2 to be formed from the second workpiece W2.

In the example illustrated in FIG. 29, the shape data input field D displayed on the display 5 includes an input field D8 (more specifically, a selection field such as a check box) designating whether to execute the reverse mode RM.

In the example illustrated in FIG. 30, the computing apparatus 4 may derive the second tool path TR in response to the output button BN2 (more specifically, the output button BN2 displayed on the display 5) being pressed or clicked with the execution of the reverse mode RM being designated. More specifically, the computing apparatus 4 derives the second tool path TR in response to the output button BN2 being pressed or clicked with the execution of the reverse mode RM being designated, based on the plurality of pieces of data input in the shape data input field D, the lead data input field E, and the machining condition input field F, and the algorithm AG that processes the plurality of pieces of data.

When the reverse mode RM is executable, it is unnecessary to input data required to generate the second tool path TR, or the amount of data to be input is reduced. Thus, it is possible to efficiently generate the second tool path TR. This reduces the burden on the operator for inputting data.

### (Computing Apparatus 4)

As illustrated in FIG. 2, the computing apparatus 4 includes at least one processor 4a (for example, at least one CPU). The tool path generator 1A (more specifically, the computing apparatus 4) causes the display 5 to display the shape data input field D, the lead data input field E, and/or the machining condition input field F by executing the program PG stored in the memory 2. Additionally, by executing the program PG stored in the memory 2, the tool path generator 1A (more specifically, the computing apparatus 4) derives the tool path TP for forming the screw 7 having the helical groove with a variable lead from the workpiece W, based on the plurality of pieces of data input in the shape data input field D, the lead data input field E, and/or the machining condition input field F. More specifically, the computing apparatus 4 that executes the program PG derives the above-described tool path TP by inputting the plurality of pieces of data input in the shape data input field D, the lead data input field E, and/or the machining condition input field F into the algorithm AG stored in the memory 2.

### (Memory 2)

The memory 2 includes a storage medium readable by the computing apparatus 4. The memory 2 may include, for example, a non-volatile or volatile semiconductor memory such as RAM, ROM, and flash memory. The memory 2 may include a magnetic disk or other forms of memories.

The memory 2 stores the program PG and various kinds of data. The memory 2 may be distributed to a plurality of locations. For example, a memory that stores data may be provided separately from a memory that stores a program. The memory 2 may include a cloud storage accessible via a network.

In the example illustrated in FIG. 31, the memory 2 stores the shape data SD, which specifies the cross-sectional shape of the screw 7 orthogonal to the rotation axis AT of the screw 7. The shape data SD includes, for example, data SD1 indicating the size of the outer circle A1 of the screw 7, data SD2 indicating the size of the inner circle A2 of the screw 7, a first shift amount SD3 indicating the rotational phase of the first curve C1 and the second curve C2 about the rotation axis AT, a second shift amount SD4 indicating the relative rotational phase between the first curve C1 and the second curve C2 about the rotation axis AT, a numerical value SD5 specifying the degree of roundness of the outer end portion of the second curve C2, a numerical value SD6 specifying the degree of roundness of the inner end portion of the second curve C2, and data SD7 indicating the size of the bottom circle A3 of the screw 7.

In the example illustrated in FIG. 31, the memory 2 stores the plurality of pieces of lead data LD. The plurality of pieces of lead data includes, for example, the first lead amount LD and the second lead amount LD2. The plurality of pieces of lead data LD may include the third lead LD3 and/or the fourth lead LD4.

The plurality of pieces of lead data LD may include a first numerical value DC1 indicating the setting position of the first lead amount LD1, and/or a second numerical value DC2 indicating the setting position of the second lead amount LD2. The plurality of pieces of lead data LD may include a third numerical value DC3 indicating the setting position of the third lead LD3, and/or a fourth numerical value DC4 indicating the setting position of the fourth lead LD4.

In the example illustrated in FIG. 31, the memory 2 stores a machining condition MC including the tool information and the machining parameter. The machining condition MC includes a first machining condition MC1 (for example, data identifying the first tool that machines the first helical side surface S1, the cutting speed relative to the first helical side surface S1, etc.) that is the machining condition of the first helical side surface S1 of the screw 7 and a second machining condition MC2 (for example, data identifying the second tool that machines the second helical side surface S2, the cutting speed relative to the second helical side surface S2, etc.) that is the machining condition of the second helical side surface S2 of the screw 7. The machining condition MC may include a third machining condition MC3 (for example, data identifying the third tool that machines the helical root surface S3, the cutting speed relative to the helical root surface S3, etc.) that is the machining condition of the helical root surface S3 of the screw 7.

In the example illustrated in FIG. 31, the memory 2 stores the tool path TP derived by the computing apparatus 4. The tool path TP may include a first side surface tool path TP1, a second side surface tool path TP2, and/or a root surface tool path TP3.

For example, by executing the program PG stored in the memory 2, the computing apparatus 4 derives the first side surface tool path TP1 for machining the first helical side surface S1 of the screw 7, based on the shape data SD stored in the memory 2, the plurality of pieces of lead data LD stored in the memory 2, and the first machining condition MC1 stored in the memory 2. The first side surface tool path TP1 derived by the computing apparatus 4 is stored in the memory 2.

For example, by executing the program PG stored in the memory 2, the computing apparatus 4 derives the second side surface tool path TP2 for machining the second helical side surface S2 of the screw 7, based on the shape data SD stored in the memory 2, the plurality of pieces of lead data LD stored in the memory 2, and the second machining condition MC2 stored in the memory 2. The second side surface tool path TP2 derived by the computing apparatus 4 is stored in the memory 2.

For example, by executing the program PG stored in the memory 2, the computing apparatus 4 derives the root surface tool path TP3 for machining the helical root surface S3 of the screw 7, based on the shape data SD stored in the memory 2, the plurality of pieces of lead data LD stored in the memory 2, and the third machining condition MC3 stored in the memory 2. The root surface tool path TP3 derived by the computing apparatus 4 is stored in the memory 2.

### (Interface 3)

The interface 3 (for example, the user interface 3a) receives input including the above-described shape data SD, the above-described plurality of pieces of lead data LD, and the above-described machining condition MC. The user interface 3a may include the keyboard 31a, the pointing device 32a such as a mouse, or other devices (for example, the touch panel 35a on the display 5).

### (Algorithm AG)

The algorithm AG, which derives the tool path TP for forming the screw 7 having the helical groove HG with a variable lead from the workpiece W, may include an expression that derives the shape of the helical groove HG, based on the above-described shape data SD and the above-described plurality of pieces of lead data LD.

FIG. 32 illustrates an example of the expression that derives the second curve C2 of the helical groove HG. In the example illustrated in FIG. 32, "a" is the radius of the inner circle A2, "b" is the radius of the outer circle A1, "θ" is a parameter, "φ" is the above-described first shift amount, and "σ" is the above-described second shift amount.

### (Generation of Measurement Path QP)

As illustrated in FIG. 19, the computing apparatus 4 may derive the shape data of the helical groove HG of the screw 7, based on the above-described shape data SD and the above-described plurality of pieces of lead data LD. Further, as illustrated in FIG. 31, shape data HS of the helical groove HG may be stored in the memory 2.

The computing apparatus 4 may derive the shape data of the first helical side surface S1 of the screw 7, based on the above-described shape data SD and the above-described plurality of pieces of lead data LD. As illustrated in FIG. 31, shape data HS1 of the first helical side surface S1 may be stored in the memory 2. The computing apparatus 4 may derive the shape data of the second helical side surface S2 of the screw 7, based on the above-described shape data SD and the above-described plurality of pieces of lead data LD. As illustrated in FIG. 31, shape data HS2 of the second helical side surface S2 may be stored in the memory 2.

As illustrated in FIG. 31, the computing apparatus 4 may generate a measurement path QP specifying a relative movement path of the measurement tool TM (refer to FIG. 33) with respect to the surface defining the helical groove HG, based on the shape data HS of the helical groove HG (or the tool path TP). As illustrated in FIG. 31, the computing apparatus 4 may store the generated measurement path QP in the memory 2.

When the tool path generator 1A generates the measurement path QP in addition to the tool path TP, it is possible to efficiently perform the measurement of the machined surface using the measurement path QP after machining the screw 7.

The computing apparatus 4 may generate a first measurement path QP1 specifying a relative movement path of the measurement tool TM with respect to the first helical side surface S1, based on the shape data HS1 of the first helical side surface S1 of the screw 7 (or the above-described first side surface tool path TP1). The computing apparatus 4 may store the generated first measurement path QP1 in the memory 2. The computing apparatus 4 may generate a second measurement path QP2 specifying a relative movement path of the measurement tool TM with respect to the second helical side surface S2, based on the shape data HS2 of the second helical side surface S2 of the screw 7 (or the above-described second side surface tool path TP2). The computing apparatus 4 may store the generated second measurement path QP2 in the memory 2.

### (Correcting Orientation of Tool cutting edge)

In the example illustrated in FIG. 34, the lead of the screw 7 (in other words, the lead of the helical groove HG) changes in the direction along the rotation axis AT of the screw 7. Further, due to the change in the lead of the screw 7 in the direction along the rotation axis AT of the screw 7, the inclination angle of the first helical side surface S1 of the screw 7 with respect to the rotation axis AT of the screw 7 changes in the direction along the rotation axis AT of the screw 7. Thus, when the orientation of the cutting edge of the tool T is fixed, the relationship between the orientation of the first helical side surface S1 and the orientation of the cutting edge of the tool T cannot be maintained to be constant.

Thus, as illustrated in FIG. 34, the orientation of the cutting edge of the tool T may be corrected in accordance with the change in the lead of the screw 7 in the direction along the rotation axis AT. By the correction, it is possible to maintain the relationship between the orientation of the first helical side surface S1 and an orientation DR3 of the cutting edge of the tool T to be substantially constant. In the example illustrated in FIG. 34, the correction changes the orientation DR3 of the cutting edge of the tool T. Due to the change in the orientation DR3 of the cutting edge of the tool T, when the position of the tool cutting edge is displaced laterally (for example, in FIG. 34, when the position of the tool cutting edge is shifted in a lateral direction perpendicular to the rotation axis AT), the lateral displacement may be corrected. In the example illustrated in FIG. 34, the correction of the orientation DR3 of the cutting edge of the tool T maintains the orientation DR3 of the cutting edge of the tool T to the orientation substantially perpendicular to the first helical side surface S1. Note that, the correction of the orientation of the cutting edge of the tool T may be configured to be performed continuously in accordance with the change in the lead of the screw 7, or may be configured to be performed step by step in accordance with the change in the lead of the screw 7.

The tool path TP derived by the computing apparatus 4 may include a code (more specifically, a program code) that corrects the orientation of the tool T that cuts the workpiece W. Further, the computing apparatus 4 may derive the code (more specifically, the program code) to cause the orientation of the cutting edge of the tool T to be corrected in accordance with the change in the lead of the screw 7 in the direction along the rotation axis AT.

The algorithm AG, which derives the tool path for forming the screw 7 having the helical groove HG with a variable lead from the workpiece W, may include an expression that derives the code that corrects the orientation of the cutting edge of the tool T, based on the above-described shape data SD and the above-described plurality of pieces of lead data LD.

FIG. 32 illustrates an example of the expression that derives the code that corrects the orientation of the cutting edge of the tool T. In the example illustrated in FIG. 32, "Ld" represents the lead at a machining point, "2πr" represents a circumferential length at the machining point, and "α" represents the correction amount of the orientation of the cutting edge of the tool T (more specifically, an angle α between the orientation DR3 of the cutting edge of the tool T and the rotation axis AT (refer to FIG. 34)).

When the tool path TP includes the code that corrects the orientation of the tool T that cuts the workpiece W, it is possible to inhibit a decrease in the machining accuracy caused due to the change in the lead.

The above-described first side surface tool path TP1 for machining the above-described first helical side surface S1 may include a first code that corrects the orientation of the cutting edge of a first tool T1 that turns the workpiece W. Further, the computing apparatus 4 may derive the first code, based on the above-described shape data SD and the above-described plurality of pieces of lead data LD to cause the orientation of the cutting edge of the first tool T to be corrected in accordance with the change in the lead of the screw 7 in the direction along the rotation axis AT (more specifically, to cause the orientation DR3 of the cutting edge of the first tool T1 to be maintained to the orientation substantially perpendicular to the first helical side surface S1).

The above-described second side surface tool path TP2 for machining the above-described second helical side surface S2 may include a second code that corrects the orientation of the cutting edge of the second tool that turns the workpiece W. Further, the computing apparatus 4 may derive the second code, based on the above-described shape data SD and the above-described plurality of pieces of lead data LD to cause the orientation of the cutting edge of the second tool to be corrected in accordance with the change in the lead of the screw 7 in the direction along the rotation axis AT (more specifically, to cause the orientation of the cutting edge of the second tool to be maintained to the orientation substantially perpendicular to the second helical side surface S2).

### (Second Embodiment)

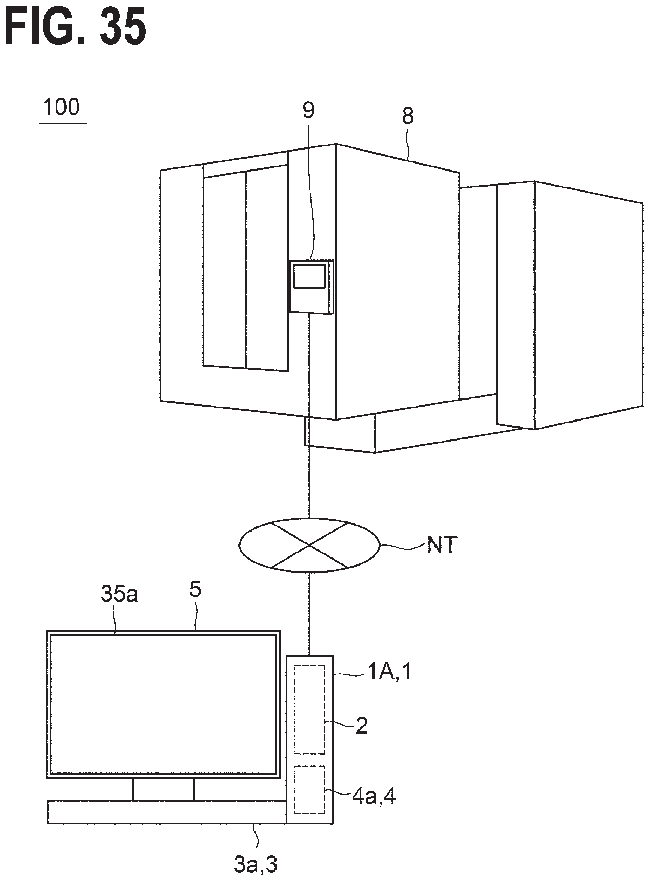

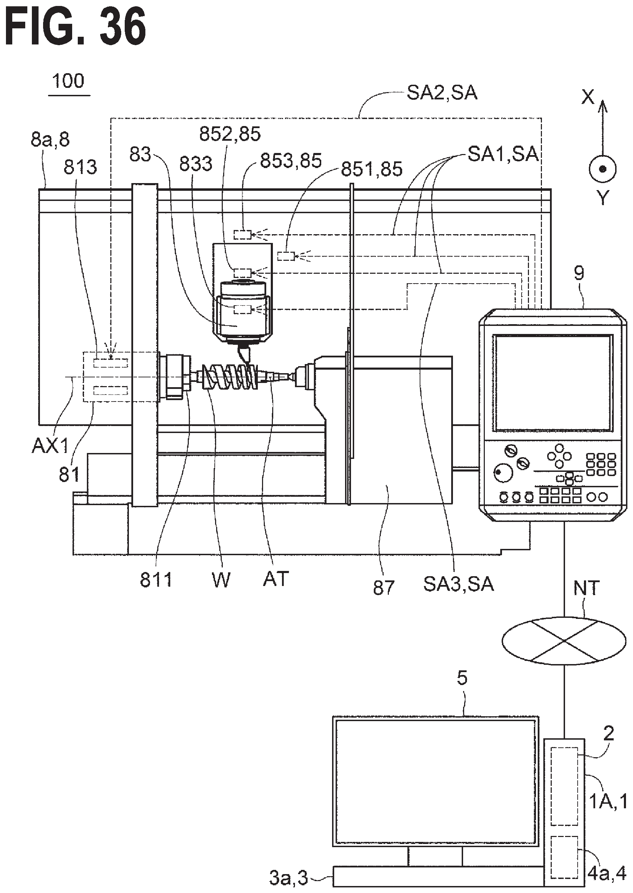

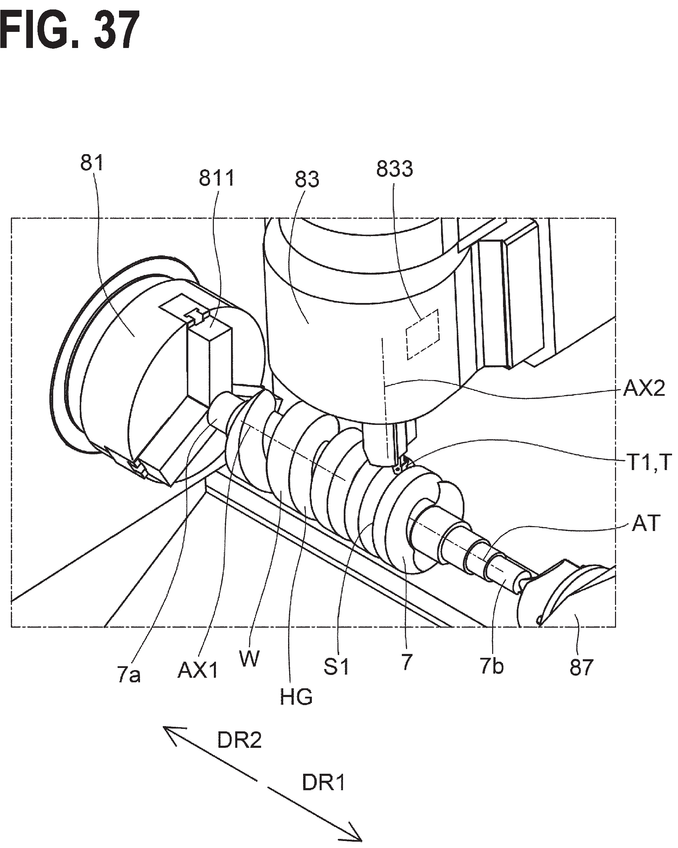

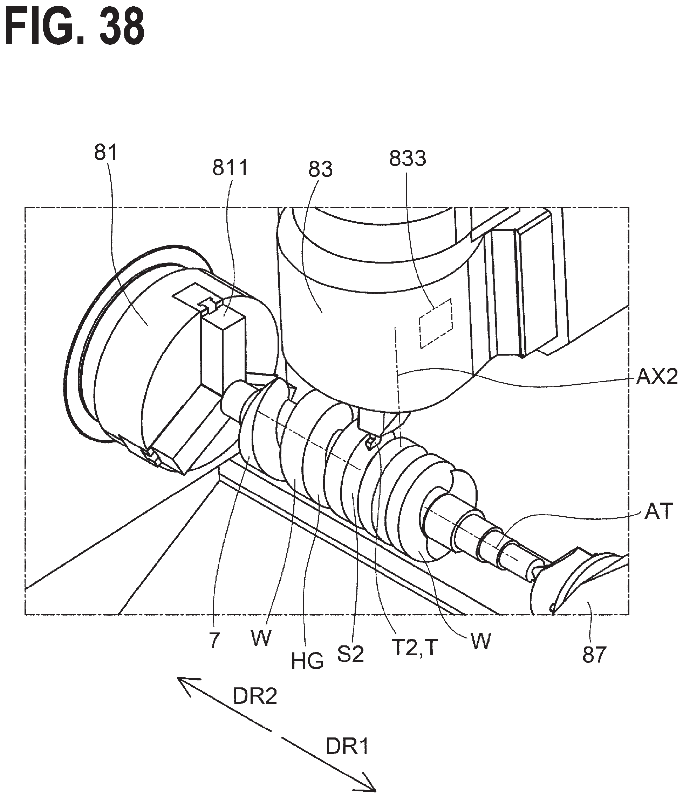

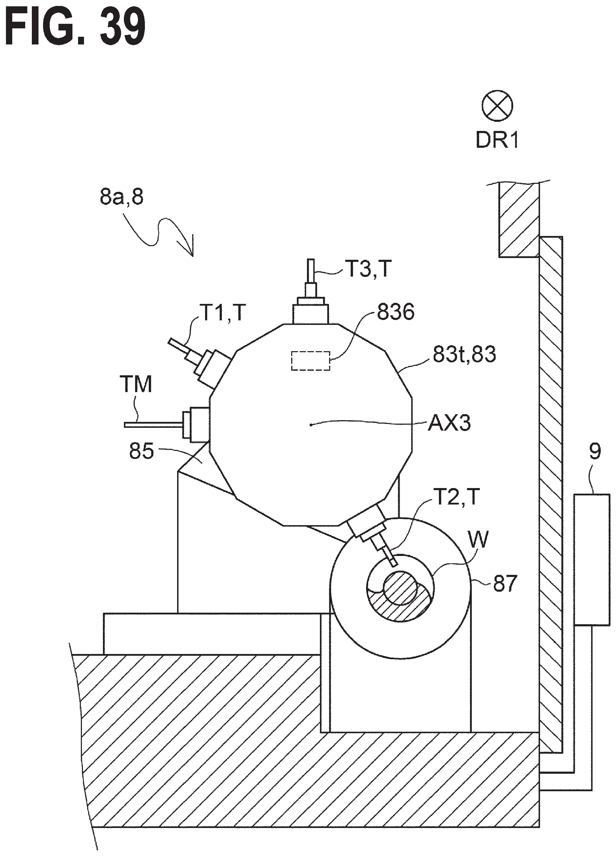

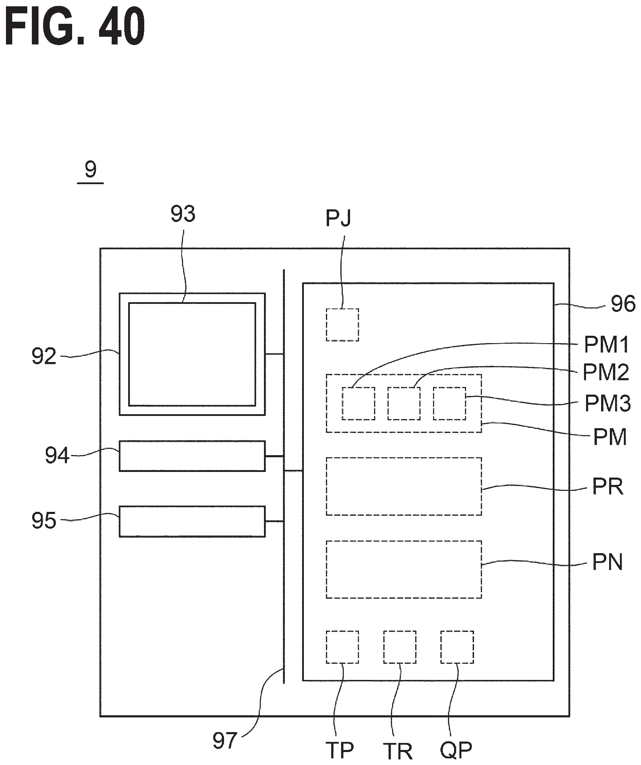

The machine tool system 100 according to a second embodiment will be described with reference to FIGs. 1 to 40. FIGs. 35 and 36 are diagrams schematically illustrating the machine tool system 100 according to the second embodiment. FIGs. 37 and 38 are perspective diagrams schematically illustrating a part of a machine tool 8. FIG. 39 is a cross-sectional diagram schematically illustrating a part of the machine tool 8 according to a modification. FIG. 40 is a diagram schematically illustrating a controller 9.

In the second embodiment, the differences from the first embodiment will mainly be described. In addition, in the second embodiment, redundant descriptions of items that have already been described in the first embodiment will be omitted. Therefore, in the second embodiment, even without an explicit description, it goes without saying that the items that have already been described in the first embodiment may be applied to the second embodiment. Vice versa, the items to be described in the second embodiment are applicable to the first embodiment.

As illustrated in FIG. 35, the machine tool system 100 according to the second embodiment includes the machine tool 8, a tool path generator 1, and the controller 9. In the example illustrated in FIG. 35, the tool path generator 1 is a device separate from the controller 9. Alternatively, the controller 9 may function as the tool path generator 1.

As illustrated in FIG. 36, the machine tool 8 includes (1) a work holder 81 that supports the workpiece W and rotates the workpiece W about a first axis AX1, (2) a machining head 83 that holds the tool T, and (3) a mover 85 that moves the machining head 83 relative to the work holder 81.

The tool path generator 1 generates the tool path TP. The tool path generator 1 includes (1) the memory 2 that stores the algorithm AG, which derives the tool path TP for forming the screw 7 having the helical groove HG with a variable lead from the workpiece W, based on the shape data SD, which specifies the cross-sectional shape of the screw 7 orthogonal to the rotation axis AT of the screw 7, and the plurality of pieces of lead data LD including the first lead amount LD1 of the screw 7 and the second lead amount LD2 of the screw 7, (2) the interface 3 (for example, the user interface 3a) that receives input including the above-described shape data SD and the plurality of pieces of lead data LD, and (3) the computing apparatus 4 that derives the tool path TP by inputting the shape data SD and the plurality of pieces of lead data LD into the algorithm AG.

The tool path generator 1 may be the tool path generator 1A according to the first embodiment or another tool path generator. The tool path generator 1A according to the first embodiment has already been described in the first embodiment, and therefore redundant descriptions of the tool path generator 1A will be omitted.

The controller 9 or the tool path generator 1 creates a machining program PM, based on the tool path TP.

The controller 9 generates a control command SA by executing the machining program PM created based on the tool path TP and transmits the control command SA to the machine tool 8. More specifically, the controller 9 transmits the control command SA to at least a first rotational driver 813 of the work holder 81 and the mover 85.

The machine tool system 100 according to the second embodiment has similar advantages as the tool path generator 1A according to the first embodiment.

### (Optional Additional Structures)

Next, optional additional structures that can be employed by the machine tool system 100 according to the second embodiment will be described with reference to FIGs. 1 to 40.

### (Machine Tool 8)

In the example illustrated in FIG. 36, the machine tool 8 is a lathe 8a. The machine tool 8 may be a multitasking machine that is capable of executing turning and other machining operations.

### (Work Holder 81)

In the example illustrated in FIG. 36, the work holder 81 includes the first rotational driver 813 (more specifically, a first motor) that rotates the workpiece W about the first axis AX1. More specifically, the work holder 81 includes a chuck 811 that holds the workpiece W and the first rotational driver 813 that rotates the chuck 811 about the first axis AX1. The first axis AX1 is substantially coaxial with the rotation axis AT of the screw 7.

### (Machining Head 83)

As illustrated in FIGs. 37 and 38, the machining head 83 may be capable of selectively holding the first tool T1 that cuts the first helical side surface S1 of the screw 7 and a second tool T2 that cuts the second helical side surface S2 of the screw 7. The machining head 83 may be capable of holding a third tool T3 (refer to FIG. 16) that cuts the helical root surface S3 of the screw 7. Further, the machining head 83 may be capable of holding the measurement tool TM (refer to FIG. 33).

In the example illustrated in FIG. 37, the machining head 83 includes a second rotational driver 833 (more specifically, a second motor) that rotates the tool T (more specifically, the first tool T1) about the second axis AX2 perpendicular to the first axis AX1. In the example illustrated in FIG. 37, it is possible for the machining head 83 (more specifically, the second rotational driver 833) to correct the orientation of the cutting edge of the tool T (more specifically, the first tool T1) in accordance with the change in the lead of the screw 7 in the direction along the first axis AX1 (or the rotation axis of the screw 7). Further, in the example illustrated in FIG. 38, it is possible for the machining head 83 (more specifically, the second rotational driver 833) to correct the orientation of the cutting edge of the second tool T2 in accordance with the change in the lead of the screw 7 in the direction along the first axis AX1 (or the rotation axis of the screw 7).

As illustrated in FIG. 39, the machine tool 8 may be the lathe 8a including the machining head 83, which is of a turret-type. In other words, the machine tool 8 may be a turret lathe. In the example illustrated in FIG. 39, the machining head 83 is capable of holding a plurality of tools T including the first tool T1 and the second tool T2 at the same time. The machining head 83 may be capable of holding the third tool T3 and/or the measurement tool TM. In the example illustrated in FIG. 39, the machine tool 8 includes a third rotational driver 836 that rotates a turret 83t (in other words, the turret-type machining head 83) about a third axis AX3. When the turret 83t is rotated about the third axis AX3, the tool used to machine the workpiece W is sequentially selected out of the plurality of tools T held by the turret 83t.

### (Mover 85)

In the example illustrated in FIG. 36, the mover 85 moves the machining head 83. The mover 85 may include a first mover 851 that moves the machining head 83 in the direction parallel to the first axis AX1. The mover 85 may include a second mover 852 that moves the machining head 83 in the direction along an X-axis perpendicular to the first axis AX1 (more specifically, in the vertical direction). Further, the mover 85 may include a third mover 853 that moves the machining head 83 in the direction along a Y-axis perpendicular to the first axis AX1 (more specifically, perpendicular to the first axis AX1 and parallel to the horizontal plane). Note that, the Y-axis is an axis perpendicular to the X-axis.

In the example illustrated in FIG. 36, the mover 85 is capable of moving the machining head 83 in three dimensions. The mover 85 may be a device that moves the machining head 83 in two dimensions or in one dimension.

### (Tailstock 87)

As illustrated in FIG. 36, the machine tool 8 may include a tailstock 87 that presses an end of the workpiece W. In the example illustrated in FIG. 36, the tailstock 87 prevents vibration of a free end of the workpiece W by pressing the free end of the workpiece W supported by the work holder 81. In the example illustrated in FIG. 37, the work holder 81 (more specifically, the chuck 811) holds the first end portion 7a of the workpiece W, and the tailstock 87 supports the second end portion 7b of the workpiece W. In the example illustrated in FIG. 36, the tailstock 87 is movable in the direction parallel to the first axis AX1.

### (Controller 9)

In the example illustrated in FIG. 36, the controller 9 is capable of controlling the mover 85 (for example, the first mover 851, the second mover 852, the third mover 853, etc.) and the first rotational driver 813. Additionally, the controller 9 may be capable of controlling the second rotational driver 833.

In the example illustrated in FIG. 40, the controller 9 includes a display 92, an inputter 93 (for example, a touch panel on the display 92), a computing apparatus 94 (the computing apparatus 94 includes at least one processor), a communication circuit 95, and a memory 96. In the example illustrated in FIG. 40, the memory 96 stores the machining program PM created based on the tool path TP.

The machining program PM may be created by the tool path generator 1 (refer to FIG. 35). In other words, the tool path generator 1 may create the machining program PM, based on the tool path TP. In this case, the machining program PM created by the tool path generator 1 may be received by the controller 9. The machining program PM may be passed from the tool path generator 1 to the controller 9 via a communication network NT, or via a portable memory such as a USB memory. The controller 9 stores the machining program PM received from the tool path generator 1 in the memory 96.

Alternatively, the machining program PM may be created by the controller 9. In other words, the controller 9 may create the machining program PM, based on the tool path TP. In this case, the tool path TP is received by the controller 9. The tool path TP may be passed from the tool path generator 1 to the controller 9 via the communication network NT or via a portable memory such as a USB memory. The controller 9 stores the tool path TP received from the tool path generator 1 in the memory 96. Further, the controller 9 creates the machining program PM, based on the tool path TP stored in the memory 96 and stores the created machining program PM in the memory 96.

The machining program PM is a program for forming the screw 7 from the workpiece W. The machining program PM may be a program created based on at least the first side surface tool path TP1 and the second side surface tool path TP2. Alternatively, the machining program PM may be a program created based on at least the first side surface tool path TP1, the second side surface tool path TP2, and the root surface tool path TP3. The machining program PM may include a plurality of sub-programs. For example, the machining program PM may include a first sub-program PM1 created based on the first side surface tool path TP1 and a second sub-program PM2 created based on the second side surface tool path TP2. Additionally, the machining program PM may include a third sub-program PM3 created based on the root surface tool path TP3.

The memory 96 may store a second machining program PR created based on the second tool path TR. The second machining program PR is a program for forming the second screw 7-2 from the second workpiece W2.

The controller 9 (more specifically, the computing apparatus 94) generates the control command SA by executing the machining program PM (or the second machining program PR). Note that, in the description, that the controller 9 (more specifically, the computing apparatus 94) executes the machining program PM (or the second machining program PR) encompasses the controller 9 (more specifically, the computing apparatus 94) executing the machining program PM via a computing program PJ. In other words, the machining program PM (or the second machining program PR) may be processed (in other words, interpreted) by the controller 9 (more specifically, the computing apparatus 94) upon execution of the computing program PJ by the controller 9 (more specifically, the computing apparatus 94).

In the example illustrated in FIG. 40, the display 92, the inputter 93, the computing apparatus 94, the communication circuit 95, and the memory 96 are coupled to each other via a bus 97.

The machine tool 8 is operated based on a control command generated by the execution of the machining program PM by the controller 9 (more specifically, the computing apparatus 94). More specifically, the communication circuit 95 transmits the control command to the machine tool 8, and the machine tool 8 that receives the control command operates based on the control command.

As illustrated in FIG. 36, the control command SA transmitted from the controller 9 to the machine tool 8 may include a movement command SA1 that moves the machining head 83 relative to the work holder 81 and a rotation command SA2 that rotates the workpiece W about the first axis AX1 (more specifically, a rotation command that rotates the chuck 811 holding the workpiece W about the first axis AX1). The movement command SA1 is transmitted from the controller 9 to the mover 85, and the rotation command SA2 is transmitted from the controller 9 to the first rotational driver 813.

As illustrated in FIG. 36, the control command SA transmitted from the controller 9 to the machine tool 8 may include a correction command SA3 that corrects the orientation of the cutting edge of the tool held by the machining head 83 in accordance with the change in the lead of the screw 7 in the direction along the first axis AX1. The correction command SA3 is transmitted from the controller 9 to the second rotational driver 833.

The mover 85 that receives the movement command SA1 from the controller 9 moves the machining head 83 relative to the work holder 81 to cause the tool T (for example, the first tool T1) to come into contact with the workpiece W (for example, the first helical side surface S1). The first rotational driver 813 that receives the rotation command SA2 from the controller 9 rotates the workpiece W (more specifically, the chuck 811 holding the workpiece W) about the first axis AX1. The second rotational driver 833 that receives the correction command SA3 from the controller 9 corrects the orientation of the cutting edge of the tool T held by the machining head 83 in accordance with the change in the lead in the direction along the first axis AX1.

### (Generation of Measurement Path QP)

As illustrated in FIG. 19, the tool path generator 1 (more specifically, the computing apparatus 4 of the tool path generator 1) may derive the shape data of the helical groove HG of the screw 7, based on the above-described shape data SD, which specifies the cross-sectional shape of the screw 7 orthogonal to the rotation axis AT of the screw 7, and the above-described plurality of pieces of lead data LD. The shape data HS of the helical groove HG may be stored in the memory 2 (refer to FIG. 31).

More specifically, the tool path generator 1 (more specifically, the computing apparatus 4 of the tool path generator 1) may derive the shape data of the first helical side surface S1 of the screw 7, based on the above-described shape data SD and the above-described plurality of pieces of lead data LD. The tool path generator 1 (more specifically, the computing apparatus 4 of the tool path generator 1) may derive the shape data of the second helical side surface S2 of the screw 7, based on the above-described shape data SD and the above-described plurality of pieces of lead data LD.

In the example illustrated in FIG. 31, the tool path generator 1 (more specifically, the computing apparatus 4 of the tool path generator 1) may generate the measurement path QP, which specifies the relative movement path of the measurement tool TM (refer to FIG. 33) with respect to the surface defining the helical groove HG, based on the shape data HS of the helical groove HG (or the tool path TP).

More specifically, the tool path generator 1 (more specifically, the computing apparatus 4 of the tool path generator 1) may generate the first measurement path QP1, which specifies the relative movement path of the measurement tool TM with respect to the first helical side surface S1, based on the shape data HS1 of the first helical side surface S1 of the screw 7 (or the above-described first side surface tool path TP1). The tool path generator 1 (more specifically, the computing apparatus 4 of the tool path generator 1) may generate the second measurement path QP2, which specifies the relative movement path of the measurement tool TM with respect to the second helical side surface S2, based on the shape data HS2 of the second helical side surface S2 of the screw 7 (or the above-described second side surface tool path TP2).

In the example illustrated in FIG. 31, the generation of the measurement path QP (for example, the first measurement path QP1 and/or the second measurement path QP2) is performed by the tool path generator 1. Alternatively, the generation of the measurement path QP (for example, the first measurement path QP1 and/or the second measurement path QP2) may be performed by the controller 9.

### (Measurement Program PN)

The controller 9 or the tool path generator 1 creates a measurement program PN, based on the measurement path QP. The created measurement program PN is stored in the memory 96 (refer to FIG. 40) of the controller 9.

The controller 9 generates a measurement control command by executing the measurement program PN created based on the measurement path QP (for example, the first measurement path QP1 and/or the second measurement path QP2) and transmits the measurement control command to the machine tool 8. For example, the controller 9 transmits the measurement control command to the first rotational driver 813 of the work holder 81 and the mover 85. Note that, the measurement program PN may be a program independent from the machining program PM. Alternatively, the machining program PM may include the measurement program PN.

The machine tool 8 (for example, the mover 85 and/or the first rotational driver 813) moves the measurement tool TM relative to the screw 7, based on the measurement control command received from the controller 9. The measurement tool TM that moves relative to the screw 7 based on the measurement control command may acquire position data of the first helical side surface S1 of the screw 7. The measurement tool TM that moves relative to the screw 7 based on the measurement control command may acquire position data of the second helical side surface S2 of the screw 7. The measurement tool TM that moves relative to the screw 7 based on the measurement control command may acquire position data of the helical root surface S3 of the screw 7 or may acquire position data of the top surface of the helical ridge HP of the screw 7.

The controller 9 may determine whether the machining accuracy is within a permissible range by comparing a theoretical position of the machined surface machined based on the machining program PM and the position data acquired by the measurement tool TM. When the machining accuracy is out of the permissible range, the controller 9 may display an alert on the display 92.

### (Third Embodiment)

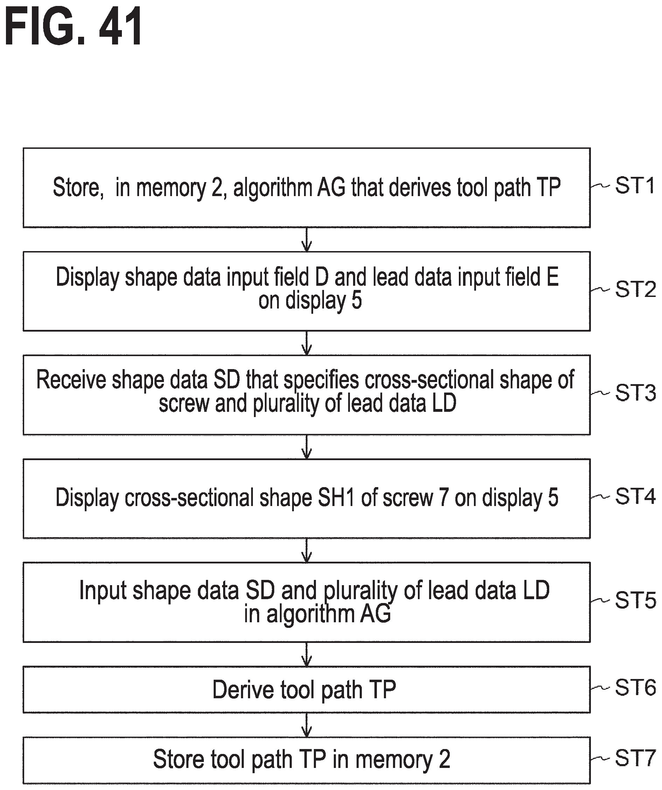

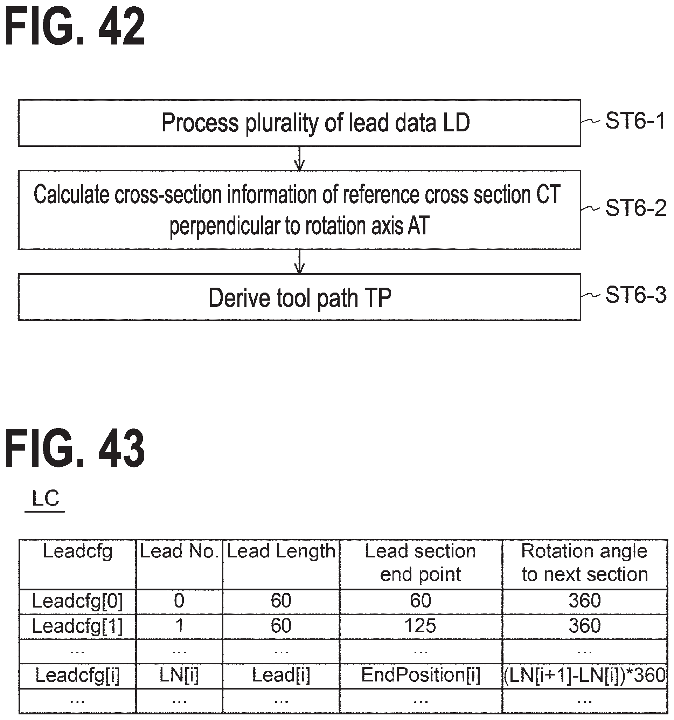

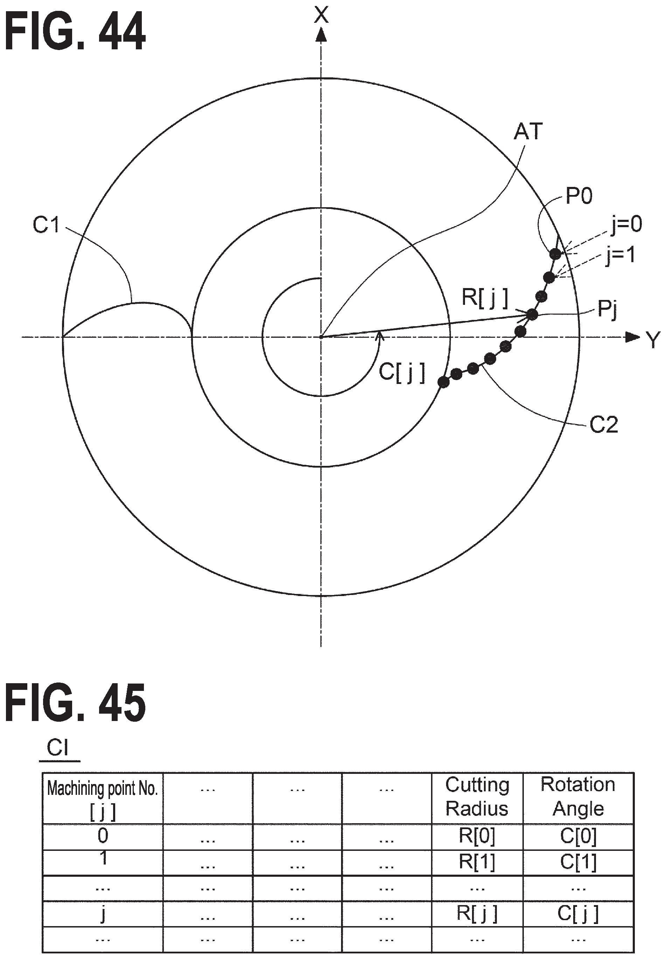

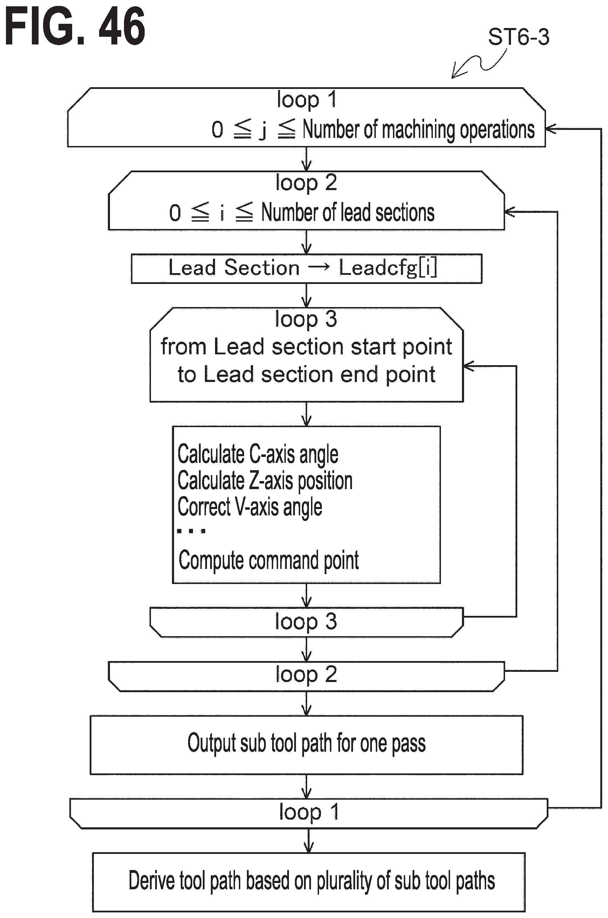

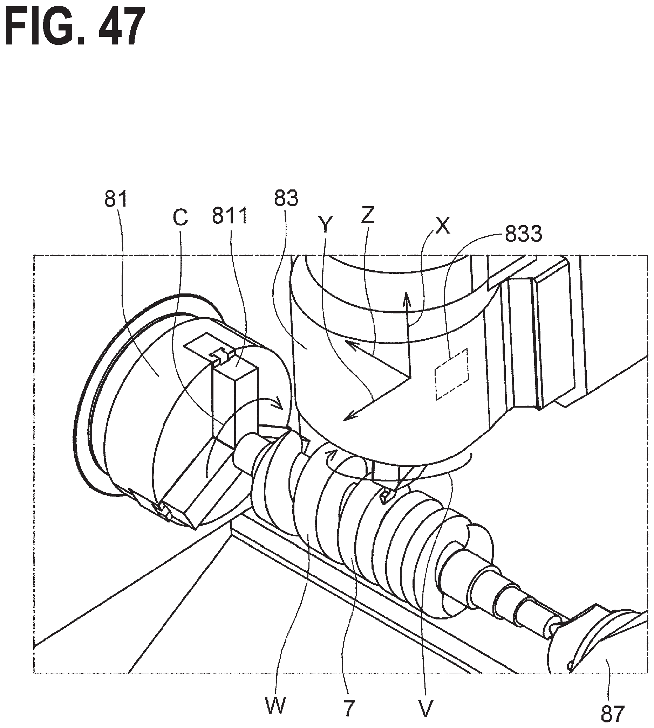

A tool path generation method and a workpiece machining method according to a third embodiment will be descried with reference to FIGs. 1 to 47. FIG. 41 is a flowchart illustrating an example of the tool path generation method according to the third embodiment. FIG. 42 is a flowchart illustrating an example of a plurality of sub-steps of a tool path derivation step. FIG. 43 is a diagram schematically illustrating an example of a lead table LC. FIG. 44 is a diagram describing a cross-section information calculation step. FIG. 45 is a table illustrating an example of cross-section information CI. FIG. 46 is a flowchart illustrating an overview of one of sub-steps of the tool path derivation step. FIG. 47 is a perspective diagram schematically illustrating a part of the machine tool 8.

In the third embodiment, the differences from the first embodiment and the second embodiment will mainly be described. In addition, in the third embodiment, redundant descriptions of items that have already been described in the first embodiment or the second embodiment will be omitted. Therefore, in the third embodiment, even without an explicit description, it goes without saying that the items that have already been described in the first embodiment or the second embodiment may be applied to the third embodiment. Vice versa, the items to be described in the third embodiment are applicable to each of the first embodiment and the second embodiment.

The tool path generation method according to the third embodiment may be performed using the tool path generator 1A (for example, the CAD/CAM system 10a) according to the first embodiment, the machine tool system 100 according to the second embodiment, or other tool path generators or other machine tool systems. The tool path generator 1A according to the first embodiment and the machine tool system 100 according to the second embodiment have already been described in the first embodiment or the second embodiment, and therefore redundant descriptions of the tool path generator 1A and the machine tool system 100 will be omitted.

As illustrated in FIG. 2 or 31, in a first step ST1, the algorithm AG, which derives the tool path TP for forming the screw 7 having the helical groove HG with a variable lead from the workpiece W, is stored in the memory 2. The first step ST1 is a storing step.

In the storing step (the first step ST1), the algorithm AG stored in the memory 2 is the algorithm AG, which derives the tool path TP for forming the screw 7 having the helical groove HG with a variable lead from the workpiece W, based on the shape data SD, which specifies the cross-sectional shape of the screw 7 orthogonal to the rotation axis AT of the screw 7, and the plurality of pieces of lead data LD including the first lead amount LD1 of the screw 7 and the second lead amount LD2 of the screw 7.

Note that, when the above-described algorithm AG is previously stored in the memory 2, the storing step (the first step ST1) is omitted.

As illustrated in FIG. 7 or 14, in a second step ST2, the shape data input field D and the lead data input field E are displayed on the display 5. The second step ST2 is a first displaying step. The first displaying step (the second step ST2) may include causing the machining condition input field F to be displayed on the display 5.

The first displaying step (the second step ST2) may include the computing apparatus 4 causing the shape data input field D and the lead data input field E to be displayed on the display 5. Further, the first displaying step (the second step ST2) may include the computing apparatus 4 causing the shape data input field D, the lead data input field E, and the machining condition input field F to be displayed on the display 5.

As illustrated in FIG. 8 or 14, the shape data input field D may include the first input field D1 in which the size of the outer circle A1 of the screw 7 is to be input.

As illustrated in FIG. 8 or 14, the shape data input field D may include the second input field D2 in which the size of the inner circle A2 of the screw 7 is to be input.

As illustrated in FIG. 8 or 14, the shape data input field D may include the third input field D3 in which the first shift amount indicating the rotational phase of the first curve C1, which couples the outer circle A1 and the inner circle A2, and the second curve C2, which couples the outer circle A1 and the inner circle A2, about the rotation axis AT is to be input.

As illustrated in FIG. 8 or 14, the shape data input field D may include the fourth input field D4 in which the second shift amount indicating the relative rotational phase between the first curve C1, which couples the outer circle A1 and the inner circle A2, and the second curve C2, which couples the outer circle A1 and the inner circle A2, about the rotation axis AT is to be input.

As illustrated in FIG. 14, the shape data input field D may include the fifth input field D5 in which a numerical value specifying the degree of roundness of the outer end portion of the second curve C2 is to be input. As illustrated in FIG. 14, the shape data input field D may include the sixth input field D6 in which a numerical value specifying the degree of roundness of the inner end portion of the second curve C2 is to be input.

As illustrated in FIG. 14, the shape data input field D may include the seventh input field D7 in which the size of the bottom circle A3 of the screw 7 is to be input.

As illustrated in FIG. 18, the lead data input field E may include the input field E2-1 for the first lead amount LD1 and the input field E2-2 for the second lead amount LD2. The lead data input field E may include the input field E2-3 for the third lead LD3 and/or the input field E2-4 for the fourth lead LD4. The lead data input field E may include the input field E2-5 for the fifth lead LD5 and/or the input field E2-6 for the sixth lead LD6.

In the example illustrated in FIG. 18, the lead data input field E includes the setting position input field Es in which a numerical value indicating a lead setting position is to be input. More specifically, the lead data input field E includes the input field E1-1 in which the first numerical value indicating the setting position of the first lead amount LD1 is to be input and/or the input field E1-2 in which the second numerical value indicating the setting position of the second lead amount LD2 is to be input. The lead data input field E may include the input field E1-3 in which the third numerical value indicating the setting position of the third lead LD3 is to be input and/or the input field E1-4 in which the fourth numerical value indicating the setting position of the fourth lead LD4 is to be input. The lead data input field E may include the input field E1-5 in which the fifth numerical value indicating the setting position of the fifth lead LD5 is to be input and/or the input field E1-6 in which the sixth numerical value indicating the setting position of the sixth lead LD6 is to be input.

As illustrated in FIG. 22, the machining condition input field F may include the first machining condition input field F1 in which the machining condition of the first helical side surface S1 of the screw 7 is to be input. The first machining condition input field F1 has already been described in the first embodiment, and therefore redundant descriptions for the first machining condition input field F1 will be omitted.

As illustrated in FIG. 22, the machining condition input field F may include the second machining condition input field F2 in which the machining condition of the second helical side surface S2 of the screw 7 is to be input. The second machining condition input field F2 has already been described in the first embodiment, and therefore redundant descriptions for the second machining condition input field F2 will be omitted.

As illustrated in FIG. 22, the machining condition input field F may include the third machining condition input field F3 in which the machining condition of the helical root surface S3 of the screw 7 is to be input. The third machining condition input field F3 has already been described in the first embodiment, and therefore redundant descriptions for the third machining condition input field F3 will be omitted.

Note that, when the shape data SD and the plurality of pieces of lead data LD that have been previously registered are present, or when the tool path generator 1 receives these pieces of data via the communication network, the first displaying step (the second step ST2) may be omitted.

In a third step ST3, the shape data SD, which specifies the cross-sectional shape of the screw 7 orthogonal to the rotation axis AT of the screw 7, and the plurality of pieces of lead data LD including the first lead amount LD1 of the screw 7 and the second lead amount LD2 of the screw 7 are received. The third step ST3 is a receiving step. The receiving step (the third step ST3) is performed by the tool path generator 1.

In the receiving step (the third step ST3), the tool path generator 1 receives the above-described shape data SD and the above-described plurality of pieces of lead data LD. In the receiving step (the third step ST3), the tool path generator 1 may receive the machining condition MC.

In the example illustrated in FIG. 8 or 14, the tool path generator 1 receives the above-described shape data SD in response to the input of the shape data SD (for example, the size of the outer circle A1 of the screw 7, the size of the inner circle A2 of the screw 7, the above-described first shift amount, the above-described second shift amount, the numerical value specifying the degree of roundness of the outer end portion of the second curve C2, the numerical value specifying the degree of roundness of the inner end portion of the second curve C2, the size of the bottom circle A3 of the screw 7, and the like) in the above-described shape data input field D. Note that, the shape data SD is input in the shape data input field D via, for example, the interface 3 (more specifically, the user interface 3a).

In the example illustrated in FIG. 8 or 14, the tool path generator 1 receives the above-described plurality of pieces of lead data LD in response to the input of the plurality of pieces of lead data LD (for example, the first lead amount LD1, the second lead amount LD2, the third lead LD3, the first numerical value indicating the setting position of the first lead amount LD1, the second numerical value indicating the setting position of the second lead amount LD2, the third numerical value indicating the setting position of the third lead LD3, and the like) in the above-described lead data input field E. Note that, the plurality of pieces of lead data LD are input in the lead data input field E via, for example, the interface 3 (more specifically, the user interface 3a).

In the example illustrated in FIG. 22, the tool path generator 1 receives the above-described machining condition MC in response to the input of the machining condition MC (for example, the first machining condition MC1, which is the machining condition of the first helical side surface S1, the second machining condition MC2, which is the machining condition of the second helical side surface S2, and/or the third machining condition MC3, which is the machining condition of the helical root surface S3) in the above-described machining condition input field F. Note that, the machining condition MC is input in the machining condition input field F via, for example, the interface 3 (more specifically, the user interface 3a).

The receiving step (the third step ST3) may include the computing apparatus 4 receiving the above-described shape data SD input in the shape data input field D via the interface 3 (for example, the user interface 3a). The receiving step (the third step ST3) may include the computing apparatus 4 receiving the above-described plurality of pieces of lead data LD input in the lead data input field E via the interface 3 (for example, the user interface 3a). The receiving step (the third step ST3) may include the computing apparatus 4 receiving the above-described machining condition MC input in the machining condition input field F via the interface 3 (for example, the user interface 3a).

As illustrated in FIG. 8 or 14, in a fourth step ST4, the cross-sectional shape SH1 of the screw 7 orthogonal to the rotation axis AT of the screw 7 may be displayed on the display 5. The fourth step ST4 is a second displaying step.

The second displaying step (the fourth step ST4) may include the computing apparatus 4 causing the cross-sectional shape SH1 of the screw 7 orthogonal to the rotation axis AT of the screw 7 to be displayed on the display 5, based on the above-described shape data SD input in the shape data input field D.

As illustrated in FIG. 8 or 14, the display 5 may display the plurality of pieces of input data input in the shape data input field D and the cross-sectional shape SH1 of the screw 7 orthogonal to the rotation axis AT of the screw 7 on the display 5 at the same time. As illustrated in FIG. 8 or 14, the computing apparatus 4 may display a first group of input data input in the shape data input field D and a second group of input data input in the lead data input field E at the same time.

Note that, the fourth step ST4 (more specifically, the second displaying step of displaying on the display 5 the cross-sectional shape SH1 of the screw 7 orthogonal to the rotation axis AT of the screw 7) may be omitted.

In a fifth step ST5, the above-described shape data SD and the above-described plurality of pieces of lead data LD are input in the above-described algorithm AG (in other words, the algorithm AG, which derives the tool path TP for forming the screw 7 having the helical groove HG with a variable lead from the workpiece W). The fifth step ST5 is an inputting step. Additionally, the inputting step (the fifth step ST5) may include inputting the above-described machining condition MC in the above-described algorithm AG.

The inputting step (the fifth step ST5) may include the computing apparatus 4 inputting the above-described shape data SD and the above-described plurality of pieces of lead data LD in the above-described algorithm AG. The inputting step (the fifth step ST5) may include the computing apparatus 4 inputting the above-described shape data SD, the above-described plurality of pieces of lead data LD, and the above-described machining condition MC in the above-described algorithm AG.

In a sixth step ST6, the tool path TP is derived. The sixth step ST6 is a tool path derivation step. The tool path derivation step (the sixth step ST6) includes the computing apparatus 4 deriving the tool path TP by inputting the above-described shape data SD and the above-described plurality of pieces of lead data LD in the above-described algorithm AG.

More specifically, the computing apparatus 4 inputs the above-described shape data SD and the above-described plurality of pieces of lead data LD in the above-described algorithm AG and derives the tool path TP as the output from the algorithm AG.

The tool path TP derived by the execution of the tool path derivation step (the sixth step ST6) may include a code (more specifically, a program code) that corrects the orientation of the tool T that cuts the workpiece W. More specifically, the computing apparatus 4 may derive the code (more specifically, the program code) to cause the orientation of the cutting edge of the tool T to be corrected in accordance with the change in the lead of the screw 7 in the direction along the rotation axis AT.

In a seventh step ST7, the derived tool path TP is stored in the memory 2. The seventh step ST7 is a second storing step. The second storing step (the seventh step ST7) may include the computing apparatus 4 causing the tool path TP to be stored in the memory 2.

The workpiece machining method according to the third embodiment includes, in addition to at least the above-described third step ST3, the above-described fifth step ST5, and the above-described sixth step ST6, (1) a step of creating the machining program PM, based on the tool path TP, (2) a step of generating the control command SA by the controller 9 executing the machining program PM, and (3) a step of cutting the workpiece W by the machine tool 8 receiving the control command SA to cause the screw 7 having the helical groove HG with a variable lead to be formed from the workpiece W.

The workpiece machining method according to the third embodiment may include, in addition to the above-described second step ST2 to the above-described seventh step ST7, (1) a step of creating the machining program PM, based on the tool path TP, (2) a step of generating the control command SA by the controller 9 executing the machining program PM, and (3) a step of cutting the workpiece W by the machine tool 8 receiving the control command SA to cause the screw 7 having the helical groove HG with a variable lead to be formed from the workpiece W.

In the tool path generation method according to the third embodiment (or the workpiece machining method according to the third embodiment), the tool path TP is derived based on the shape data SD, which specifies the cross-sectional shape of the screw 7 orthogonal to the rotation axis AT of the screw 7, and the plurality of pieces of lead data LD. Thus, it is possible to efficiently generate the tool path TP for forming the screw 7 having the helical groove HG with a variable lead.

### (Optional Additional Configurations)

Next, optional additional configurations that can be employed by the tool path generation method (or the workpiece machining method) according to the third embodiment will be described with reference to FIGs. 1 to 47.

### (First Displaying Step)

As illustrated in FIG. 29, the first displaying step (the second step ST2) may include displaying, on the display 5, the input field D8 (more specifically, a selection field such as a check box) designating whether to execute the reverse mode RM. Note that, the reverse mode RM is a mode that derives the second tool path TR for forming the second screw 7-2, which has the second helical groove HG2 in a mirror-image relationship with the helical groove HG, from the second workpiece W2, based on the above-described shape data SD and the above-described plurality of pieces of lead data LD.

In the example illustrated in FIG. 30, in response to the output button BN2 (more specifically, the output button BN2 displayed on the display 5) being pressed or clicked with the execution of the reverse mode RM being designated, the computing apparatus 4 derives the second tool path TR for forming the second screw 7-2, which has the second helical groove HG2 in a mirror-image relationship with the above-described helical groove HG, from the second workpiece W2.

When the reverse mode RM is executable, it is unnecessary to input data required to generate the second tool path TR, or the amount of data to be input is reduced. Thus, it is possible to efficiently generate the second tool path TR. This reduces the burden on the operator for inputting data.

### (Tool Path Derivation Step)

The tool path derivation step (the sixth step ST6) may include a plurality of sub-steps.

As illustrated in FIG. 42, the tool path derivation step (the sixth step ST6) may include a step of processing the plurality of pieces of lead data LD (hereinafter, referred to as "lead information processing step") as one sub-step ST6-1. More specifically, in the lead information processing step, the lead table LC (Leadcfg) is created based on the above-described lead data LD.

The lead information processing step (the sub-step ST6-1) may include dividing the screw 7 into a plurality of sections in the direction along the rotation axis AT, based on the plurality of pieces of lead data LD, and deriving data including a section end point and the rotation amount to the next section for each of the sections. FIG. 43 illustrates an example of the lead table LC obtainable by executing the lead information processing step (the sub-step ST6-1).

As illustrated in FIG. 42, the tool path derivation step (the sixth step ST6) may include a step (hereinafter, referred to as a "cross-section information calculation step") of calculating the cross-section information at a reference cross section CT perpendicular to the rotation axis AT as one sub-step ST6-2. As illustrated in FIG. 44, the cross-section information calculation step may include calculating a plurality of machining points Pj on the first curve C1 (or the second curve C2) in the reference cross section CT (more specifically, the machining start cross-section) perpendicular to the rotation axis AT, a machining radius R[j] at each of the machining points, and a rotational angle C[j] at each of the machining points about the rotation axis AT. FIG. 45 illustrates an example of the cross-section information CI obtainable by executing the cross-section information calculation step (the sub-step ST6-2).

The tool path derivation step (the sixth step ST6) may include, as one sub-step ST6-3, a step of deriving the tool path TP, based on a plurality of pieces of data obtainable by executing the lead information processing step (for example, the lead table LC obtainable by executing the lead information processing step), the cross-section information CI obtainable by executing the cross-section information calculation step, and the above-described machining condition MC. FIG. 46 is a flowchart illustrating an overview of the flow of the step (the sub-step ST6-3) of deriving the tool path TP. Note that, a "C-axis" and a "V-axis" in FIG. 46 respectively correspond to a "C" axis and a "V" axis in FIG. 47.

### (Generation of Measurement Path QP)

The tool path generation method according to the third embodiment (or the workpiece machining method according to the third embodiment) may include a step of generating the measurement path QP, which specifies the relative movement path of the measurement tool TM (refer to FIG. 33) with respect to the surface defining the helical groove HG, based on the shape data HS of the helical groove HG (or the tool path TP).

The workpiece machining method according to the third embodiment may include (1) a step of creating the measurement program PN, based on the above-described measurement path QP, (2) a step of generating the measurement control command by the controller 9 executing the measurement program PN, and (3) a step of measuring, by the machine tool 8 that receives the measurement control command, the machined surface of the screw 7 using the measurement tool T.

### (Program PG)

The program PG according to the embodiment is a program for causing the tool path generator 1 or the machine tool system 100 to execute the tool path generation method according to the third embodiment.

More specifically, the program PG according to the embodiment is a program for causing the tool path generator 1 or the machine tool system 100 to execute (1) a step (in other words, the above-described third step ST3) of receiving the shape data SD, which specifies the cross-sectional shape of the screw 7 orthogonal to the rotation axis AT of the screw 7, the plurality of pieces of lead data LD including the first lead amount LD1 of the screw 7 and the second lead amount LD2 of the screw 7, (2) a step (in other words, the above-described fifth step ST5) of inputting the above-described shape data SD and the above-described plurality of pieces of lead data LD into the algorithm AG, which derives the tool path TP for forming the screw 7 having the helical groove HG with a variable lead from the workpiece W, and (3) a step (in other words, the above-described sixth step ST6) of deriving the tool path TP by inputting the above-described shape data SD and the above-described plurality of pieces of lead data LD in the above-described algorithm AG.

The third step ST3, the fifth step ST5, and the sixth step ST6 have already been described in the third embodiment, and therefore redundant descriptions for these steps will be omitted. The sixth step ST6 may include a plurality of sub-steps (for example, the sub-step ST6-1, the sub-step ST6-2, and the sub-step ST6-3).

The program PG according to the embodiment may be a program for causing the tool path generator 1 or the machine tool system 100 to execute the tool path generation method (more specifically, the tool path generation method according to the third embodiment) including a step (in other words, the above-described second step ST2) of causing the above-described shape data input field D and the above-described lead data input field E to be displayed on the display 5 in addition to the above-described third step ST3, the above-described fifth step ST5, and the above-described sixth step ST6. The second step ST2 has already been described in the third embodiment, and therefore redundant descriptions for the second step ST2 will be omitted.

The program PG according to the embodiment may be a program for causing the tool path generator 1 or the machine tool system 100 to execute the tool path generation method (more specifically, the tool path generation method according to the third embodiment) including a step (in other words, the above-described fourth step ST4) of causing the cross-sectional shape of the screw 7 orthogonal to the rotation axis AT of the screw 7 to be displayed on the display 5 in addition to the above-described second step ST2, the above-described third step ST3, the above-described fifth step ST5, and the above-described sixth step ST6. The fourth step ST4 has already been described in the third embodiment, and therefore redundant descriptions for the fourth step ST4 will be omitted.

The program PG according to the embodiment may be a program for causing the tool path generator 1 or the machine tool system 100 to execute the tool path generation method (more specifically, the tool path generation method according to the third embodiment) including a step (in other words, the above-described seventh step ST7) of causing the derived tool path TP to be stored in the memory 2 in addition to the above-described second step ST2 to the above-described sixth step ST6. The seventh step ST7 has already been described in the third embodiment, and therefore redundant descriptions for the seventh step ST7 will be omitted.

The program PG according to the embodiment may be a program for causing the tool path generator 1 or the machine tool system 100 to execute the tool path generation method (more specifically, the tool path generation method according to the third embodiment) including a step of generating the measurement path QP, which specifies the relative movement path of the measurement tool TM (refer to FIG. 33) with respect to the surface defining the helical groove HG, based on the shape data HS of the helical groove HG (or the tool path TP) in addition to the above-described third step ST3, the above-described fifth step ST5, and the above-described sixth step ST6 (or in addition to the above-described second step ST2 to the above-described seventh step ST7).

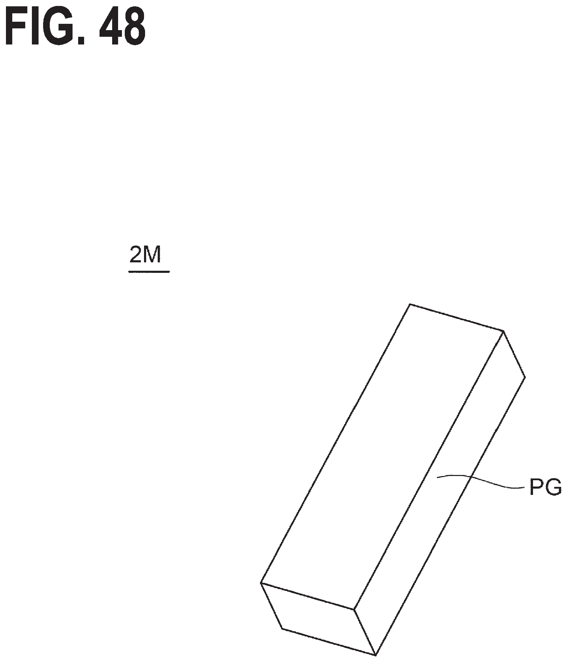

The memory 2 according to the first embodiment or the second embodiment may be a non-volatile storage medium that stores the above-described program PG. The non-volatile storage medium that stores the above-described program PG may be a portable storage medium 2M as illustrated in FIG. 48.

The program PG according to the embodiment has a similar effect to the tool path generation method according to the third embodiment when the program PG is executed by the tool path generator 1 or the machine tool system 100.

It should be clearly understood that the present invention is not limited to the above-described embodiments or modifications, and each of the embodiments or modifications may be deformed or modified as required within the range of the technical ideas obtainable from the present invention. Various techniques used in each of the embodiments or modifications may be applied to other embodiments or modifications unless a technical contradiction arises. Furthermore, any optional additional structure in each of the embodiments or modifications may be omitted as required.

### Description of Reference Numerals

1, 1A ... Tool path generator, 2 ... Memory, 2M ... Storage medium, 3 ... Interface, 3a ... User interface, 4 ... Computing apparatus, 4a ... Processor, 5 ... Display, 6 ... Communication circuit, 6a ... Communication interface, 7 ... Screw, 7-2 ... Second screw, 7a ... First end portion, 7b ... Second end portion, 8 ... Machine tool, 8a ... Lathe, 9 ... Controller, 10a ... CAD/CAM system, 11 ... Bus, 31a ... Keyboard, 32a ... Pointing device, 35a ... Touch panel, 81 ... Work holder, 83 ... Machining head, 83t ... Turret, 85 ... Mover, 87 ... Tailstock, 92 ... Display, 93 ... Inputter, 94 ... Computing apparatus, 95 ... Communication circuit, 96 ... Memory, 97 ... Bus, 100 ... Machine tool system, 811 ... Chuck, 813 ... First rotational driver, 833 ... Second rotational driver, 836 ... Third rotational driver, 851 ... First mover, 852 ... Second mover, 853 ... Third mover, A1 ... Outer circle, A2 ... Inner circle, A3 ... Bottom circle, AG ... Algorithm, AT ... Rotation axis, AX1 ... First axis, AX2 ... Second axis, AX3 ... Third axis, BN1 ... edit button, BN2 ... Output button, C[j] ... Rotational angle, C1 ... First curve, C2 ... Second curve, CI ... Cross-section information, CT ... Reference cross section, D ... Shape data input field, D1 ... First input field, D2 ... Second input field, D3 ... Third input field, D4 ... Fourth input field, D5 ... Fifth input field, D6 ... Sixth input field, D7 ... Seventh input field, D8 ... Input field for designating whether to execute reverse mode, DA1 ... Dimension data of outer circle, DA2 ... Dimension data of inner circle, DA3 ... Numerical expression data, DC1 ... First numerical value, DC2 ... Second numerical value, DC3 ... Third numerical value, DC4 ... Fourth numerical value, DR1 ... First direction, DR2 ... Second direction, DR3 ... Orientation of cutting edge of tool, E ... Lead data input field, E1-1 ... Input field for first numerical value, E1-2 ... Input field for second numerical value, E1-3 ... Input field for third numerical value, E1-4 ... Input field for fourth numerical value, E1-5 ... Input field for fifth numerical value, E1-6 ... Input field for sixth numerical value, E1-7 ... Input field for seventh numerical value, E2-1 ... Input field for first lead amount, E2-2 ... Input field for second lead amount, E2-3 ... Input field for third lead, E2-4 ... Input field for fourth lead, E2-5 ... Input field for fifth lead, E2-6 ... Input field for sixth lead, E2-7 ... Input field for seventh lead, Es ... Setting position input field, F ... Machining condition input field, F1 ... First machining condition input field, F1-1 ... Input field for data specifying first tool, F1-2 ... Input field for machining parameter of first helical side surface, F1-3 ... Input field for tool parameter of first tool, F1-4 ... Input field for identifier specifying first helical side surface, F1-5 ... Input field for name of machining program for machining first helical side surface, F2 ... Second machining condition input field, F2-1 ... Input field for data specifying second tool, F2-2 ... Input field for machining parameter of second helical side surface, F2-3 ... Input field for tool parameter of second tool, F2-4 ... Input field for identifier specifying second helical side surface, F2-5 ... Input field for name of machining program for machining second helical side surface, F3 ... Third machining condition input field, F3-1 ... Input field for data specifying third tool, F3-2 ... Input field for machining parameter of helical root surface, F3-3 ... Input field for tool parameter of third tool, F3-4 ... Input field for identifier specifying helical root surface, F3-5 ... Input field for name of machining program for machining helical root surface, HG ... helical groove, HG-B ... Root surface, HG2 ... Second helical groove, HP ... helical ridge, HS ... Shape data of helical groove, HS1 ... Shape data of first helical side surface, HS2 ... Shape data of second helical side surface, Ht ... Crest, J ... Instruction designating execution of reverse mode, LC ... Lead table, LD ... Lead data, LD1 ... First lead amount, LD2 ... Second lead amount, LD3 ... Third lead, LD4 ... Fourth lead, LD5 ... Fifth lead, LD6 ... Sixth lead, MC ... Machining condition, MC1 ... First machining condition, MC2 ... Second machining condition, MC3 ... Third machining condition, NT ... Communication network, PG ... Program, PJ ... Computing program, PM ... Machining program, PM1 ... First sub-program, PM2 ... Second sub-program, PM3 ... Third sub-program, PN ... Measurement program, PR ... Second machining program, Pj ... Machining point, QP ... Measurement path, QP1 ... First measurement path, QP2 ... Second measurement path, R[j] ... Machining radius, RM ... Reverse mode, S1 ... First helical side surface, S2 ... Second helical side surface, S3 ... helical root surface, SA ... Control command, SA1 ... Movement command, SA2 ... Rotation command, SA3 ... Correction command, SD ... Shape data specifying cross-sectional shape of screw, SD1 ... Data indicating size of outer circle of screw, SD2 ... Data indicating size of inner circle of screw, SD3 ... First shift amount, SD4 ... Second shift amount, SD5 ... Numerical value specifying degree of roundness of outer end portion of second curve, SD6 ... Numerical value specifying degree of roundness of inner end portion of second curve, SD7 ... Data indicating size of bottom circle of screw, SH1 ... Cross-sectional shape of screw, SH2 ... Three-dimensional shape of screw, T ... Tool, T1 ... First tool, T2 ... Second tool, T3 ... Third tool, TM ... Measurement tool, TP ... Tool path, TP1 ... First side surface tool path, TP2 ... Second side surface tool path, TP3 ... Root surface tool path, TR ... Second tool path, W ... Workpiece, W2 ... Second workpiece

## Claims

1. A tool path generator comprising:
a memory configured to store an algorithm that derives a tool path for forming a screw having a helical groove with a variable lead from a workpiece, based on shape data specifying a cross-sectional shape of the screw orthogonal to a rotation axis of the screw and a plurality of pieces of lead amount data comprising a first lead amount of the screw and a second lead amount of the screw;
an interface configured to receive input including the shape data and the plurality of pieces of lead amount data; and
a computing apparatus configured to derive the tool path by inputting the shape data and the plurality of pieces of lead amount data into the algorithm.

2. The tool path generator according to claim 1, further comprising
a display configured to display a shape data input field that is an input field for the shape data and a lead amount data input field that is an input field for the plurality of pieces of lead amount data.

3. The tool path generator according to claim 2, wherein
the lead amount data input field comprises:
an input field for the first lead amount;
an input field for the second lead amount; and
an input field in which a numerical value indicating a setting position of the second lead amount is to be input.

4. The tool path generator according to claim 2 or 3, wherein
the shape data input field comprises:
an input field for a size of an outer circle of the screw;
an input field for a size of an inner circle of the screw; and
an input field for a first shift amount indicating a rotational phase, about the rotation axis, of a first curve that couples the outer circle and the inner circle and a second curve that couples the outer circle and the inner circle.

5. The tool path generator according to claim 4, wherein the shape data input field comprises an input field for a second shift amount indicating a relative rotational phase between the first curve and the second curve about the rotation axis.

6. The tool path generator according to claim 4 or 5, wherein
the shape data input field comprises at least one of
an input field for a numerical value specifying a degree of roundness of an outer end portion of the second curve, or
an input field for a numerical value specifying a degree of roundness of an inner end portion of the second curve.

7. The tool path generator according to any one of claims 2 to 6, wherein the display is configured to display the cross-sectional shape of the screw derived based on the shape data input in the shape data input field.

8. The tool path generator according to any one of claims 1 to 7, wherein
when a direction from a first end portion of the screw toward a second end portion of the screw is defined as a first direction, and a direction from the second end portion of the screw toward the first end portion of the screw is defined as a second direction,
the helical groove is defined by
a first helical side surface on a side toward the first direction,
a second helical side surface on a side toward the second direction, and
a helical root surface coupling the first helical side surface and the second helical side surface.

9. The tool path generator according to any one of claims 1 to 8, wherein the computing apparatus is configured to derive a second tool path for forming, from a second workpiece, a second screw having a second helical groove that is in a mirror-image relationship with the helical groove, based on the shape data, the plurality of pieces of lead amount data, and an instruction designating execution of a reverse mode.

10. The tool path generator according to any one of claims 1 to 9, wherein
the tool path comprises a code that corrects an orientation of a cutting edge of a tool that cuts the workpiece, and
the computing apparatus is configured to derive the code to cause the orientation of the cutting edge to be corrected in accordance with a change in a lead amount of the screw in a direction along the rotation axis.

11. A machine tool system comprising:
a machine tool;
a tool path generator configured to generate a tool path; and
a controller configured to generate a control command by executing a machining program created based on the tool path and transmit the control command to the machine tool, wherein
the machine tool comprises
a work holder configured to support a workpiece and rotate the workpiece about a first axis,
a machining head configured to hold a tool, and
a mover configured to move the machining head relative to the work holder, the tool path generator comprises
a memory configured to store an algorithm that derives the tool path for forming a screw having a helical groove with a variable lead from the workpiece, based on shape data specifying a cross-sectional shape of the screw orthogonal to a rotation axis of the screw and a plurality of pieces of lead amount data comprising a first lead amount of the screw and a second lead amount of the screw;
an interface configured to receive input including the shape data and the plurality of pieces of lead amount data; and
a computing apparatus configured to derive the tool path by inputting the shape data and the plurality of pieces of lead amount data into the algorithm.

12. The machine tool system according to claim 11, wherein
the tool path generator or the controller is configured to generate a measurement path specifying a relative movement path of a measurement tool with respect to a surface defining the helical groove, based on the shape data of the helical groove or the tool path, and
the controller is configured to generate a measurement control command by executing a measurement program created based on the measurement path and transmit the measurement control command to the machine tool.

13. A tool path generation method comprising:
receiving shape data specifying a cross-sectional shape of a screw orthogonal to a rotation axis of the screw and a plurality of pieces of lead amount data comprising a first lead amount of the screw and a second lead amount of the screw;
inputting the shape data and the plurality of pieces of lead amount data in an algorithm that derives a tool path for forming the screw having a helical groove with a variable lead from a workpiece; and
deriving the tool path by inputting the shape data and the plurality of pieces of lead amount data into the algorithm.

14. The tool path generation method according to claim 13, further comprising
displaying, on a display, a shape data input field that is an input field for data specifying the cross-sectional shape and a lead amount data input field that is an input field for the plurality of pieces of lead amount data.

15. A program configured to cause a tool path generator or a machine tool system to execute the tool path generation method according to claim 13 or 14.
